# EUROPÄISCHE PATENTSCHRIFT

(11) **EP 4 526 662 B1**
(45) Veröffentlichungstag und Bekanntmachung des Hinweises auf die Patenterteilung: **25.02.2026**
(21) Anmeldenummer: 23725719.1
(22) Anmeldetag: 15.05.2023
(51) Int. Cl.: G01N 21/71, G01J 3/443, G01J 3/02

(54) **SPEKTROMETERSYSTEM ZUR LASERINDUZIERTEN PLASMASPEKTRALANALYSE**
SYSTEM FOR LASER INDUCED BREAKDOWN SPECTROSCOPY
SYSTÈME DE SPECTROMÈTRE POUR L'ANALYSE SPECTRALE DU PLASMA INDUITE PAR LASER

(30) Priorität: 20.05.2022 DE 102022112766
(43) Veröffentlichungstag der Anmeldung: 26.03.2025
(73) Patentinhaber: QUANTOLUX INNOVATION GMBH, 89134 Blaustein (DE)
(72) Erfinder: KUNZ, Andreas, 47577 Kleve (DE); OUNANIAN, Mischa, 47574 Goch-Kessel (DE)
(74) Vertreter: Grättinger Möhring von Poschinger Patentanwälte Partnerschaft mbB
(86) Internationale Anmeldenummer: PCT/EP2023/063002
(87) Internationale Veröffentlichungsnummer: WO 2023/222618

(56) Entgegenhaltungen:
- CN-A- 102 967 587
- CN-A- 103 604 780
- CN-A- 110 220 871
- CN-U- 216 284 940
- US-A1- 2003 232 445
- US-A1- 2021 341 392

## Beschreibung

Die vorliegende Erfindung betrifft Spektrometersysteme zur laserinduzierten Plasmaspektroskopie, insbesondere stationäre Spektrometersysteme zur spektralen Analyse eines auf einer, in einem Probengefäß positionierten, Probe laserinduzierten Plasmas.

Laserinduzierte Plasmaspektroskopie - auch als LIBS (laser induced breakdown spectroscopy) oder LIPS (laser induced plasma spectroscopy) bezeichnet - wird zur Bestimmung einer elementspezifischen Zusammensetzung einer Probe mithilfe eines Plasmas eingesetzt. Das Plasma wird mit hochintensiver, fokussierter Laserstrahlung an der Oberfläche der Probe erzeugt. Vom Plasma emittiertes Licht wird detektiert und spektral ausgewertet, um auf eine elementare Zusammensetzung der Probe zurückzuschließen.

Aus dem Stand der Technik sind LIBS-Systeme bekannt, die für eine korrekte Fokussierung der Laserstrahlung auf die Oberfläche ein Höhenprofil der Probe vermessen und entsprechend das Spektrometer im Abstand anpassen. Eine automatische Fokussiervorrichtung ist z. B. in CN 107783242 A offenbart. CN 216 284 940 U offenbart eine Scan-Vorrichtung für die Laser-Emissionsspektroskopie, wobei die Scan-Vorrichtung Parameter wie eine Anfangsposition, einen Bewegungsmittelpunkt einer spiralförmigen Bewegungsspur einstellen lässt, so dass eine Bewegungsspur mit einer spiralförmigen gleichmäßigen linearen Geschwindigkeitsbewegung bewirkt werden kann. Ferner sind portable Geräte mit z. B. einem oder mehreren Spektrometern bekannt, siehe z. B. US 11,085,882 B1. CN 110220871 A und CN 103 604 780 A offenbaren LIBS-Plasmaspektralsammelsysteme mit einem Fokussiermikroskopobjektiv und zwei seitlich in einem Einstellrahmen monierte und auf einen Plasmafokuspunkt ausgerichtete Linsen-Faser-Einheiten. CN 102 967 587 A offenbart einen solchen Aufbau für eine optische Detektionssonde für geschmolzene flüssige Komponenten.

US 2021/341392 betrifft die laserinduzierte Ablationsspektroskopie, wobei Licht aus der Laserablation in einem Lichtleitfaserbündel gesammelt wird. Dabei werden verschiedene Zweige verschiedenen Spektrometern zugeführt. Ein Zweig kann einen ersten Teil des Lichts zu einem Breitbandspektrometer leiten; ein anderer Zweig kann einen zweiten Teil des Lichts zu einem Spektrometer mit hoher Dispersion leiten; dabei können ein oder mehrere Optiken eingesetzt werden.

Im Bereich der "light scattering spectrocopy" offenbart US 2003/0232445 A1 Systeme und Verfahren zur Bestimmung der physikalischen Eigenschaften einer strukturierten oberflächlichen Materialschicht. Hinsichtlich der Detektion wird dabei von verschiedenen Fasern erfasstes Licht auf jeweils eigene Bereiche eines Detektors projiziert.

Vorteile von LIBS, und allgemein von einer laserbasierten optischen Emissionsspektroskopie, umfassen die kontaktfreie Analyse, die bei einem Abstand zur Probe von z. B. 100 mm, 200 mm oder 500 mm erfolgt und frei von ionisierender Strahlung ist. Beispielhafte Anwendungsbereiche einer der hierin offenbarten und auf LIBS basierenden Materialidentifikation umfassen eine Analyse von homogenen und heterogenen Proben an einer stationären Anlage oder eine Analyse durchlaufender Proben, beispielsweise eine (online) Metallanalytik von auf einem Förderband transportierten Proben. So kann die Materialidentifikation als Vorbereitungsschritt bei einer Materialsortierung eingesetzt werden. Die schnelle Auswertbarkeit der detektierten Spektren kann z. B. bei Förderband-Anlagen Vorschubgeschwindigkeiten von einigen m/s erlauben. LIBS-Systeme können aufgrund der kontaktfreien Analyse hinsichtlich industrieller Arbeitsumgebungen unempfindlich und fehlerresistent ausgebildet werden.

Allgemein ist die vorliegende Offenbarung darauf gerichtet, zumindest zum Teil einen oder mehrere Aspekte von bekannten LIBS-basierten Systemen zu verbessern. Einem Aspekt dieser Offenbarung liegt die Aufgabe zugrunde, den Einsatz von LIBS mit einer einfachen Handhabung von Proben zu ermöglichen. Insbesondere ist eine schnelle und zuverlässige Analyse von Proben mit strukturiertem undefinierten (und damit unbekannten) Oberflächenverlauf wesentlich für die Integration von LIBS in industrielle Arbeitsabläufe. Einem weiteren Aspekt dieser Offenbarung liegt die Aufgabe zugrunde, im Rahmen von LIBS ausreichend starke Detektionssignale bereitzustellen, insbesondere auch bei der Analyse von Proben mit einem strukturierten undefinierten Oberflächenverlauf. Einem weiteren Aspekt dieser Offenbarung liegt die Aufgabe zugrunde, ein optisches System, insbesondere für LIBS, anzugeben, das die Nachteile des Standes der Technik insbesondere mit Blick auf Proben mit strukturiertem undefinierten Oberflächenverlauf behebt. Einem weiteren Aspekt dieser Offenbarung liegt die Aufgabe zugrunde, ein Lichtleitsystem für ein LIBS-System anzugeben, das eine einfache Weiterleitung von Plasmalicht zu einem optischen Spektrometer ermöglicht.

Zumindest eine dieser Aufgaben wird gelöst durch ein Spektrometersystem nach Anspruch 1. Weiterbildungen sind in den Unteransprüchen angegeben.

In einem Aspekt umfasst ein Spektrometersystem zur laserinduzierten Plasmaspektralanalyse eine Laserstrahlquelle zur Abgabe eines, insbesondere gepulsten, Laserstrahls und eine Fokussieroptik zur Fokussierung des Laserstrahls auf eine Probe. In Abhängigkeit von Laserparametern des Laserstrahls und einem Material der Probe wird ein Plasmazündbereich entlang der Strahlachse derart ausgebildet, dass eine im Plasmazündbereich angeordnete Oberfläche der Probe zur Ausbildung eines laserinduzierten Plasmas führt. Ferner umfasst das Spektrometersystem eine Detektionseinheit zum Erfassen von Plasmalicht, das vom laserinduzierten Plasma emittiert wird. Die Detektionseinheit umfasst eine Objektivhalterung und mehrere von der Objektivhalterung gehaltene Objektive. Jedem der Objektive ist ein Detektionskegel zugeordnet, der in einem Überlappungsbereich mit dem Laserstrahl einen Plasmadetektionsbereich ausbildet, sodass bei der Ausbildung des laserinduzierten Plasmas in einem der Plasmadetektionsbereiche ein Messanteil des Plasmalichts vom entsprechenden der Objektive erfassbar ist. Die Plasmadetektionsbereiche bilden zusammen einen Sichtbereich der Detektionseinheit aus. Insbesondere ist der Sichtbereich in Ausbreitungsrichtung des Laserstrahls entlang der Strahlachse im Bereich des Plasmazündbereichs angeordnet. Ferner umfasst das Spektrometersystem ein Probengefäß (beispielsweise einen Probenteller mit eine runden oder rechteckigen Form) mit einer Probengefäßbodenfläche, auf der die Probe (z. B. für einen Messvorgang zur spektralen Analyse) positionierbar ist, eine Probengefäßlagerung und ein optisches Spektrometer zur Spektralanalyse der von der Detektionseinheit erfassten Messanteile des Plasmalichts. Die Probengefäßlagerung ist dazu ausgebildet, das Probegefäß (z. B. den Probenteller) derart zu verfahren, dass (z. B. für den Messvorgang zur spektralen Analyse) eine Mehrzahl von Abschnitten der Oberfläche der Probe im Plasmazündbereich positionierbar ist.

In einigen Weiterbildungen des Spektrometersystems kann die Probengefäßlagerung dazu ausgebildet sein, eine Relativbewegung zwischen Probengefäß und Strahlachse zu bewirken, bei der der Sichtbereich beabstandet über die Probengefäßbodenfläche entlang einer, insbesondere kreisförmigen, spiralförmigen, linienförmigen oder rasterförmigen, Abtasttrajektorie verfahren wird. Optional kann die Probengefäßlagerung einen Rotationsantrieb, einen Schwenkantrieb und/oder einen Linearantrieb umfassen, um die Relativbewegung zu bewirken.

In einigen Weiterbildungen kann die Probengefäßlagerung einen Rotationsantrieb umfassen, der dazu ausgebildet ist, eine Rotationsbewegung des Probengefäßes um eine Rotationsachse anzutreiben, wobei die Rotationsachse insbesondere unter einem Winkel im Bereich von 0° bis 80° zur Strahlachse verläuft. Die Probengefäßlagerung kann ferner umfassen einen Schwenkantrieb, der dazu ausgebildet ist, die Rotationsachse entlang einer Kreisbahn im Raum zu bewegen, und/oder einen Linearantrieb, der dazu ausgebildet ist, die Rotationsachse entlang einer Achse im Raum zu bewegen.

In einigen Weiterbildungen des Spektrometersystems kann die Probengefäßlagerung zwei Linearantriebe umfassen, die dazu ausgebildet sind, das Probengefäß in einer Ebene im Raum zu verfahren. Alternativ oder zusätzlich kann das Probengefäß eine zweidimensionale Ausdehnung aufweisen und die Strahlachse kann unter einem Winkel im Bereich von 0° bis 80° zu einer Normalenrichtung der zweidimensionalen Ausdehnung des Probengefäßes verlaufen.

In einigen Weiterbildungen kann das Spektrometersystem ferner einen Umlenkspiegel umfassen, wobei der Umlenkspiegel dazu ausgebildet ist, den Laserstrahl zwischen Fokussieroptik und Probengefäß, insbesondere um 90°, umzulenken. Die Detektionseinheit ist bevorzugt zwischen dem Umlenkspiegel und dem Probengefäß angeordnet sein.

Entsprechend der Erfindung sind sind die Objektive des Spektrometersystems derart in der Objektivhalterung angeordnet und ausgerichtet, dass die Plasmadetektionsbereiche entlang der Strahlachse versetzt angeordnet sind und zusammen den Sichtbereich der Detektionseinheit ausbilden. Alternativ oder zusätzlich können sich die Plasmadetektionsbereiche entlang der Strahlachse teilweise überlappen, ineinander übergehen oder voneinander beabstandet sind und/oder sich entlang der Strahlachse jeweils über 0,1 mm bis 15 mm (beispielsweise 0,1 mm bis 10 mm) und/oder über 1/10 bis 1/4 des Sichtbereichs erstrecken.

In einigen Weiterbildungen des Spektrometersystems können die Objektive derart in der Objektivhalterung angeordnet und ausgerichtet sein, dass die Detektionskegel in einem Überlappungsbereich mit dem Laserstrahl einen gemeinsamen Plasmadetektionsbereich ausbilden, aus dem im Fall eines im Plasmadetektionsbereich vorliegenden Plasmas von jedem der Objektive ein Messanteil des Plasmalichts erfassbar ist. Alternativ oder zusätzlich kann sich jeder der Detektionskegel entlang einer Beobachtungsachse erstreckt, die unter einem Beobachtungswinkel im Bereich von 0° bis 90° zur Strahlachse verläuft. Insbesondere können die Beobachtungsachsen der Objektive auf einer Kegeloberfläche um die Strahlachse liegen.

In einigen Weiterbildungen können die Objektive azimutal beabstandet um die Strahlachse angeordnet sein. Die Objektive können derart in der Objektivhalterung angeordnet und ausgerichtet sein, dass die Detektionskegel in unterschiedliche Raumwinkel emittierte Messanteile des Plasmalichts eines Plasmas erfassen können.

In einigen Weiterbildungen kann die Objektivhalterung eine Halterungsplatte aufweisen, in der mehrere Objektivhalterungsöffnungen zur Aufnahme der Objektive und eine optische Durchgangsöffnung für den Laserstrahl (205) vorgesehen sind. Die Objektivhalterungsöffnungen können dabei um die optische Durchgangsöffnung herum angeordnet sein. Ferner können die Objektive azimutal beabstandet um die Strahlachse, insbesondere azimutal gleichverteilt um die Strahlachse (205A), angeordnet sein. Beispielsweise kann die Detektionseinheit zwei bis 25, insbesondere vier, Objektive umfassen.

In einigen Weiterbildungen kann das Spektrometersystem ferner einen Tragrahmen umfassen, an dem die Fokussieroptik, die Probengefäßlagerung und optional das optische Spektrometer befestigt sind. Die Objektivhalterung kann eine am Tragrahmen befestigte oder als Teil des Tragrahmens ausgebildete Halterungsplatte aufweisen, an der die Objektive befestigt sind und in der eine optische Durchgangsöffnung für den Laserstrahl vorgesehen ist. Die Strahlachse kann sich insbesondere orthogonal zur Halterungsplatte erstrecken.

In einigen Weiterbildungen kann das Spektrometersystem ferner ein optisches Lichtleitsystem umfassen, das zum Weiterleiten von mit der Detektionseinheit erfassten Messanteilen des Plasmalichts an das optische Spektrometer ausgebildet ist und mehrere optische Eingängen und einen optischen Ausgang umfasst. Jeder der optischen Eingänge ist optisch einem der Objektive zugeordnet und zur Aufnahme des mit dem zugeordneten Objektiv erfassten Messanteils ausgebildet und der optischen Ausgang ist zur Einkopplung von mit den Objektiven erfassten Messanteilen in das optische Spektrometer ausgebildet ist.

Insbesondere kann mindestens eines der Objektive derart ausgebildet und in der Objektivhalterung angeordnet sein, dass ein Messanteil des Plasmalichts, der im Detektionskegel des Objektivs erfasst wird, auf den dem Objektiv zugeordneten optischen Eingang abgebildet wird. Ferner kann jedem der aus dem optischen Lichtleitsystem austretenden Messanteile eine Strahlachse zugeordnet sein, wobei die Strahlachsen parallel zueinander sind oder nicht mehr als unter einem Winkel von bis zu 1° oder bis zu 3° zueinander verlaufen.

In einigen Weiterbildungen des Spektrometersystems kann das optische Spektrometer eine Eintrittsapertur, insbesondere einen Eintrittsspalt, ein dispersives optisches Element, insbesondere ein Gitter, Prisma oder Gitterprisma, und einen Detektor umfassen. Die Messanteile können durch die Eintrittsapertur in das optische Spektrometer eingekoppelt werden und über das dispersive optische Element spektral aufgelöst zu dem Detektor geführt werden, um eine den Objektiven der Detektionseinheit zugeordnete spektrale Verteilung auszugeben.

Allgemein liegen die Spitzen der Detektionskegel der Detektionseinheit kurz hinter der Laserstrahlachse, wodurch die Detektionskegel ein mögliches Plasma im Plasmadetektionsbereich "umarmen". Die Objektive sind derart in der Objektivhalterung angeordnet und ausgerichtet sein, dass die Plasmadetektionsbereiche entlang der Strahlachse versetzt angeordnet sind und einen entlang der Strahlachse länglich ausgebildeten Sichtbereich ausbilden.

Allgemein ist der Sichtbereich der Detektionseinheit ein Bereich entlang der Strahlachse, aus dem die Detektionseinheit Plasmalicht in Form von Messanteilen einzelner Objektive erfassen kann. Die Detektionseinheit kann insbesondere zwei bis 25, beispielsweise vier, fünf, acht, neun oder 15 Objektive umfassen.

In einem weiteren Aspekt weist ein Spektrometersystem zur Spektralanalyse eines von einem laserinduzierten Plasma emittierten Plasmalichts eine Laserstrahlquelle zur Abgabe eines, insbesondere gepulsten, Laserstrahls auf, wobei das Plasma mit dem sich entlang einer Strahlachse ausbreitenden Laserstrahl auf einer Oberfläche einer Probe erzeugt wird. Ferner umfasst das Spektrometersystem eine Fokussieroptik zur Fokussierung des Laserstrahls auf die Oberfläche der Probe, eine hierin offenbarte Detektionseinheit, und ein optisches Spektrometer zur Spektralanalyse von einem von der Detektionseinheit erfassten Plasmalicht. Plasmadetektionsbereiche der Detektionseinheit sind in einem Abschnitt entlang der Strahlachse angeordnet. Ferner sind die Laserstrahlquelle und die Fokussieroptik dazu ausgebildet, dass bei Positionierung der Oberfläche der Probe in jedem der Plasmadetektionsbereiche ein Plasma erzeugt wird. Hierzu sind zum Beispiel Strahlparameter des Laserstrahls, umfassend insbesondere Pulsdauer und Pulsenergie eines gepulsten Laserstrahls, in Abhängigkeit des Materials der Probe entsprechend eingestellt bzw. einstellbar.

In einigen Weiterbildungen können die Plasmadetektionsbereiche sich entlang der Strahlachse teilweise überlappen, ineinander übergehen oder voneinander beabstandet sein. Alternativ oder zusätzlich können sich die Plasmadetektionsbereiche entlang der Strahlachse jeweils über 0,1 mm bis 10 mm oder über 1/10 bis 1/4 des Sichtbereichs erstrecken. Alternativ oder zusätzlich kann die Objektivhaltung eine optische Durchgangsöffnung bereitstellt, durch die die Strahlachse verläuft, wobei eine Lage der Strahlachse insbesondere mittig in der optischen Durchgangsöffnung festgelegt sein kann. Die Objektivhalterung kann insbesondere eine Halterungsplatte aufweisen, in der mehrere Objektivhalterungsöffnungen zur Aufnahme der Objektive und die optische Durchgangsöffnung für den Laserstrahl vorgesehen sind. Die Objektivhalterungsöffnungen können um die optische Durchgangsöffnung herum, und insbesondere um die optische Durchgangsöffnung azimutal verteilt, angeordnet sein. Die Objektivhalterungsöffnungen können als Durchgangsöffnungen oder Aussparungen ausgebildet sein, wobei allgemein auf einer Seite der Halterungsplatte Aperturen der Objektive der Detektionseinheit zur Lichtaufnahme und auf der anderen Seite Lichtausgänge der Objektive zur Einkopplung von Licht in Lichtleitsystem angeordnet sein können.

In einigen Weiterbildungen kann sich jeder der Detektionskegel (ausgehend von der Apertur eines zugehörigen Objektivs) entlang einer Beobachtungsachse erstrecken, die unter einem Beobachtungswinkel im Bereich von ca. 0° bis ca. 90° zur Strahlachse verläuft. Die Beobachtungswinkel können insbesondere gleich sein, nicht mehr als 3° voneinander abweichen oder in einem Winkelbereich von 45° verteilt sein. Die Objektivhalterung kann insbesondere eine Halterungsplatte aufweisen, in der eine optische Durchgangsöffnung für den Laserstrahl vorgesehen ist, wobei sich die Strahlachse orthogonal zur Halterungsplatte erstreckt. Mindestens einer der Detektionskegel kann sich (ausgehend von der Apertur eines zugehörigen Objektivs) entlang einer Beobachtungsachse erstrecken, die unter einem Beobachtungswinkel in einem Bereich von ca. 0° bis ca. 90°, insbesondere in einem Bereich von ca. 3° bis ca. 60°, beispielsweise im Bereich von ca. 5° bis ca. 25°, zur Strahlachse verläuft.

In einigen Weiterbildungen können die Objektive azimutal (insbesondere azimutal bezüglich der Strahlachse) beabstandet um die Strahlachse angeordnet sein. Die Objektive können insbesondere azimutal gleichverteilt um die Strahlachse angeordnet sein. Mit anderen Worten können Beobachtungsachsen der Objektive ausgehend vom jeweiligen Zentrum der Apertur eines Objektivs in Richtung Strahlachse verlaufen und entsprechend Ebenen definieren, die durch die Strahlachse und die jeweilige Beobachtungsachse verlaufen. Jeder der Ebenen kann ein spezifischer azimutale Winkel bezüglich der Strahlachse zugeordnet sein. Bei vier azimutal gleichverteilten Objektiven unterscheiden sich die azimutalen Winkel benachbarter Objektive beispielsweise um 90°.

In einigen Weiterbildungen kann die Detektionseinheit ferner ein optisches Lichtleitsystem umfassen, das mehrere optische Eingängen und einen optischen Ausgang aufweist. Jeder der optischen Eingänge kann optisch mit einem der Objektive verbunden und zur Aufnahme des mit dem zugeordneten Objektiv erfassten Messanteils ausgebildet sein. Der optische Ausgang kann zur Abgabe der mit den Objektiven erfassten Messanteile ausgebildet sein. Mit anderen Worten kann der optische Ausgang des Lichtleitsystems als ein gemeinsamer funktioneller Ausgang zur Abgabe der mit dem Objektiven erfassten Messanteile ausgebildet sein.

In einigen Weiterbildungen kann optische Lichtleitsystem mehrere Lichtleitfasern aufweisen. Jeweils eine Lichteintrittsfläche einer der Lichtleitfasern kann einen der optischen Eingänge ausbilden und das dem optischen Eingang zugeordnete Objektiv kann dazu ausgebildet und angeordnet (insbesondere ausgerichtet) sein, den Plasmadetektionsbereich des zugeordneten Objektivs auf die Lichteintrittsfläche abzubilden. Die Lichtaustrittsflächen der Lichtleitfasern können den optische Ausgang bilden, wobei die Lichtaustrittsflächen insbesondere aneinander angrenzend oder beabstandet, aufgereiht angeordnet sein können. Ferner können die Lichtaustrittsflächen, insbesondere entsprechend der Abfolge der Plasmadetektionsbereiche im Sichtbereich, aufgereiht angeordnet sein. In einigen Weiterbildungen können die Lichtleitfasern ausgangsseitig linear, insbesondere zur Ausrichtung entlang eines Eintrittsspalt eines optischen Spektrometers, in dem beispielsweise eine spektrale Aufspaltung des Plasmalichts für die Spektralanalyse von einem von der Detektionseinheit erfassten Plasmalicht erfolgt, aufgereiht sein. Insbesondere kann ausgangsseitig eine parallele Faserorientierung zur gleichgerichteten Abgabe der Messanteile vorliegen.

In einigen Weiterbildungen kann eine Lichtführungszone einen Durchmesser z. B. im Bereich von ca. 100 µm bis ca. 1.000 µm oder mehr, insbesondere im Bereich von ca. 100 µm bis ca. 300 µm, im Bereich von ca. 150 µm bis ca. 250 µm oder im Bereich von ca. 750 µm bis ca. 850 µm, aufweisen.

In einigen Ausführungsformen des Spektrometers kann dieses ein optisches Lichtleitsystem umfassen, das zum Weiterleiten von mit der Detektionseinheit erfassten Messanteilen des Plasmalichts an das optische Spektrometer ausgebildet ist und mehrere optische Eingänge und einen optischen Ausgang umfasst. Jeder der optischen Eingänge kann optisch einem der Objektive zugeordnet und zur Aufnahme des mit dem zugeordneten Objektiv erfassten Messanteils ausgebildet sein. Der optische Ausgang kann zur Einkopplung von mit den Objektiven erfassten Messanteilen in das optische Spektrometer ausgebildet sein. Insbesondere kann mindestens eines der Objektive derart ausgebildet und in der Objektivhalterung angeordnet sein, dass ein Messanteil des Plasmalichts, der im Detektionskegel des Objektivs erfasst wird, auf den dem Objektiv zugeordneten optischen Eingang abgebildet wird.

In einigen Weiterbildungen kann jedem der aus dem optischen Lichtleitsystem austretenden Messanteile eine Strahlachse zugeordnet sein, und die Strahlachsen können parallel zueinander oder nicht mehr als unter einem Winkel von bis zu ca. 1° oder bis zu ca. 3° zueinander verlaufen.

In einigen Weiterbildungen kann das optische Spektrometer eine Eintrittsapertur, insbesondere einen Eintrittsspalt, ein dispersives optisches Element, insbesondere ein Gitter, Prisma oder Gitterprisma, und einen Detektor umfassen, wobei die Messanteile durch die Eintrittsapertur in das optische Spektrometer eingekoppelt werden können und über das dispersive optische Element spektral aufgelöst zu dem Detektor geführt werden können, um eine den Objektiven der Detektionseinheit zugeordnete spektrale Verteilung auszugeben.

Beispiele für erfindungsgemäß zu untersuchende Proben/Materialien umfassen homogene und inhomogene Materialien, die insbesondere durch eine ungleichmäßige, nicht-einheitlich räumliche Oberflächenkontur gekennzeichnet sind. Mögliche Proben/zu untersuchende Materialien umfassen Feststoffe, Pulver oder Granulate wie Metalle, Glas, Sand, Salz, Mineralien, Schlacke, Gestein, Mehl, Zucker, (landwirtschaftliche) Bodenproben, Gips, Ton, Kalk, Mergel, Zement, Kohle, Koks, Erz, Emulsionen, Schlämme und insbesondere auch dick/zäh-flüssige Proben wie Schmelzen, z. B. von Glas, Aluminium, Eisen und Roheisen, Salz, usw.

Im Rahmen der hierin offenbarten Objektive erstreckt sich ein detektierbares Volumen von der Objektivapparatur (allgemein umfasst ein Objektiv ein oder mehrere fokussierende optische Elemente, wie eine fokussierende Linse oder ein fokussierender Spiegel, sowie optional defokussierende optische Elemente, wie eine defokussierende Linse oder ein defokussierender Spiegel, die in einem Gehäuse gehalten sind) in Richtung des zu erfassenden Plasmas. Das mit einem Objektiv detektierbare Volumen wird hierin als Detektionskegel bezeichnet (und ist auch als "Lichtkegel" eines Objektivs bekannt). Im Rahmen der vorliegenden Offenbarung entspricht ein Detektionskegel somit allgemein einem Volumen, aus dem Licht von einem Objektiv erfasst und zu einem optischen Spektrometer weitergeleitet werden kann. Im Fall einer runden Objektivapertur ist das detektierbare Volumen kegelförmig im engeren Sinne, d. h. mit einem kreisförmigen Querschnitt, ausgebildet. Im Rahmen der vorliegenden Offenbarung umfasst ein Detektionskegel auch eine Kegelgeometrie, die von der Rotationssymmetrie abweicht und somit keine runde Querschnittsgeometrie aufweist. Die Achse des Detektionskegels wird hierin auch als Beobachtungsachse bezeichnet und definiert allgemein eine Beobachtungsrichtung des Objektivs.

Bei LIBS stellt ein Überlappungsbereich des Detektionskegels mit dem Laserstrahl einen Plasmadetektionsbereich eines Objektivs dar. Der Detektionskegel erstreckt sich üblicherweise über das Plasma, das vom Laserstrahl im Bereich der Strahlachse des Laserstrahls erzeugt wird, und geht damit über die Strahlachse hinaus, um im Bereich des Plasmas einen an die Größe des Plasmas angepassten Querschnitt zur Detektion eines möglichst großen Messanteils des Plasmalichts aufzuweisen.

Mit anderen Worten kann jedes Objektiv Plasmalicht eines Plasmas in einem vorgegebenen Raumwinkel bezogen auf einen Fokuspunkt des Objektivs erfassen. Voraussetzung ist, dass das Plasma im, den Raumwinkel des erfassbaren Lichts definierenden, Detektionskegel/Lichtkegel des Objektivs liegt, bevorzugt am spitzen Ende des Detektionskegels/Lichtkegels. Mögliche Ausmaße des Querschnitts des Detektionskegels an der Position des zu detektierenden Plasmas können derart sein, dass sich an der Position des zu detektierenden Plasmas eine Länge in Ausbreitungsrichtung des Detektionskegels ergibt, die z. B. im Bereich von 10 % bis 25 % der Länge des von der Detektionseinheit bereitzustellenden Sichtbereichs (in Ausbreitungsrichtung) umfasst und beispielsweise im Bereich von 0,1 mm bis 10 mm oder z. B. bis 15 mm liegen kann.

Im Rahmen der hierin offenbarten LIBS werden Proben untersucht, die auf der Seite des auftreffenden Laserstrahls eine dreidimensionale Kontur aufweisen, sodass - bei der Durchführung der Messung an verschiedenen Oberflächenbereichen - eine Oberfläche der Probe in Richtung der Strahlachse des Laserstrahls nicht an einem festen Ort liegt, auf den der Laserstrahl fokussiert werden könnte. Die dreidimensionale Form der Probe bewirkt, dass sich auch das Plasma nicht an einem festen Ort in Richtung der Strahlachse ausbildet, sondern in seiner Position entlang der Strahlachse des Laserstrahls variieren kann. Das Ausmaß der möglichen Variation des Orts eines für die spektrale Analyse nutzbaren Plasmas (hierin auch als Plasmazündbereich ("laser induced plasma excitation area") bezeichnet) hängt - neben dem Verlauf der Oberfläche der Probe in Richtung der Strahlachse und der Einkoppelfähigkeit (Absorption) des Materials - von der Fokussierung des Laserstrahls, und insbesondere vom Intensitätsverlauf des Laserstrahls im Fokusbereich, ab. Bei entsprechenden Strahlparametern (Fokusdurchmesser und Fokuslänge) und Laserparametern (Laserleistung, Laserpulsenergie, Laserpulsdauer...) kann sich der mögliche Plasmazündbereich in Richtung der Strahlachse über Bruchteile eines Millimeters bis zu einigen Millimetern (z. B. 2 mm bis 4 mm) oder auch bis zu einigen 10 cm, z. B. bis zu 20 cm, erstrecken.

In einigen Ausführungsformen kann eine Umsetzung des multifokalen Konzepts folgende Vorteile aufweisen. Hinsichtlich der Detektion von Plasmalicht wird eine Tiefenschärfe, hier im Sinne eines erfassbaren Tiefenbereichs entlang der Laserausbreitungsrichtung, gegeben durch die Anordnung der Objektive, deutlich vergrößert. Dadurch wird eine Untersuchung von Proben mit ungleichmäßiger Oberflächenform ermöglicht bzw. erleichtert. Auf diese Weise wird das Erfassen von Plasmalicht über den Zündbereich hinweg unabhängig von einer mechanischen Bewegung der Detektionseinheit oder der Probe in Laserstrahlrichtung. Es ergibt sich eine größere Toleranz bezüglich der Lage der Probe/Probenoberfläche und damit der Oberflächengeometrie der Probe. Ferner kann eine Probenvorbereitung wie Glattstreichen eines Pulvers oder Glattpressen einer Oberfläche entfallen.

Beim Design einer Detektionsvorrichtung kann über die optische Auslegung eines einzelnen Objektivs die Tiefenschärfe erhöht werden. Eine durch die optische Auslegung eines einzelnen Objektivs bewirkte größere Tiefenschärfe kann eine Vergrößerung des Abstands zur Probe bedingen, wodurch die Menge an vom Objektiv erfassten Licht verkleinert wird (Verkleinerung des Raumwinkels/Lichtkegels des Objektivs). Um dies zu kompensieren, kann ein Objektiv mit größerer Apertur (größerem Lichtkegel) verwendet werden.

Im Unterschied zu derartigen Designs/optischen Auslegungen von Objektiven bewirkt das erfinderische multifokale Konzept eine sich über einen größeren Bereich erstreckende Tiefenschärfe durch den Einsatz mehrerer Objektive mit versetzten Plasmadetektionsbereichen. Die versetzten Plasmadetektionsbereichen bewirken, dass Plasmalicht aus einem größeren Tiefenbereich erfassbar wird. Eine Veränderung des Abstands ist nicht notwendig, sodass die Menge des jeweils erfassten Lichts erhalten bleibt.

U.a. aufgrund einer größeren Toleranz hinsichtlich des Orts, an dem ein zu erfassendes Plasma erzeugt wird, kann mit dem hierin vorgeschlagenen multifokalen Detektionsansatz eine im Wesentlichen probenvorbereitungsfreie Analyse von (homogenen und heterogenen) Proben an einer stationären Anlage oder eine Analyse von durchlaufenden Proben durchgeführt werden.

In einigen Ausführungsformen des multifokalen Konzepts kann - auch bei einer stärker strukturierten dreidimensionalen Oberflächenform einer Probe - eine spektrometrische Untersuchung ohne oder, wenn überhaupt, mit einer nur rudimentären, dem Messvorgang vorausgehenden Höheneinstellung erfolgen.

In einigen Ausführungsformen kann eine Umsetzung des multilateralen Konzepts folgende Vorteile aufweisen. Eine gleichzeitige Betrachtung eines Plasmas kann aus unterschiedlichen Beobachtungsrichtungen erfolgen, wobei die Summe aller "Beobachtungsrichtungen" als Ergebnis ein gemeinsames spektrales optisches (Ausgangs-)Messsignal bilden. Auch wenn eine der Beobachtungsrichtungen aufgrund der Oberflächenform der Probe oder einem anderen Hindernis geblockt wird, kann noch ein ausreichender Messanteil für die spektrale Analyse zur Verfügung stehen.

In einigen Ausführungsformen des optischen Lichtleitsystems kann die Kombination von n>1 Fasern (z. B. n=2, 3, 4 ...10...15) auf einen (funktionellen) Faserausgang eine vorteilhafte Einspeisung mehrerer Objektive in ein optisches Spektrometer erlauben. Vorteile einer derartigen n-fachen Betrachtung zeigen sich bei der Umsetzung des multifokalen Konzepts sowie des multilateralen Konzepts.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische Übersicht eines LIBS-Systems,
- Fig. 2: eine Skizze zur Verdeutlichung des multifokalen Konzepts,
- Fig. 3: eine perspektivische Ansicht eines beispielhaften LIBS-Messkopfs,
- Fig. 4A und 4B: eine Aufsicht auf eine erste beispielhafte Halterungsplatte und eine perspektivische Ansicht einer Detektionseinheit (multifokales Konzept),
- Fig. 5A und 5B: eine Aufsicht auf eine zweite beispielhafte Halterungsplatte und eine perspektivische Ansicht einer Detektionseinheit (multifokales Konzept),
- Fig. 6A und 6B: eine Aufsicht auf eine beispielhafte Halterungsplatte und eine perspektivische Ansicht einer Detektionseinheit (multilaterales Konzept),
- Fig. 7A bis 7E: schematische Skizzen zur Verdeutlichung eines beispielhaften mehrere Lichtleitfasern umfassenden Lichtleitsystems,
- Fig. 8A bis 8C: schematische Skizzen zur Verdeutlichung einer Einkopplung des Lichtleitsystems aus Fig. 6 in ein optisches Spektrometer,
- Fig. 9A und 9B: eine Illustration beispielhafter spektrale Intensitätsverläufe mit zugehöriger Messkonstellation (multifokales Konzept, Plasma in einem Plasmadetektionsbereich),
- Fig. 10A und 10B: eine Illustration beispielhafter spektrale Intensitätsverläufe mit zugehöriger Messkonstellation (multifokales Konzept, Plasma innerhalb zweier Plasmadetektionsbereichen),
- Fig. 11A und 11B: eine Illustration beispielhafter spektrale Intensitätsverläufe mit zugehöriger Messkonstellation (multilaterales Konzept, ohne Abschattung),
- Fig. 12A und 12B: eine Illustration beispielhafter spektrale Intensitätsverläufe mit zugehöriger Messkonstellation (multilaterales Konzept, mit Abschattung),
- Fig. 13A bis 13F: schematische Illustrationen zur Erläuterung eines stationären Spektrometer mit einem positionierbaren Probengefäß unter beispielhafter Verwendung des multifokalen Konzepts und
- Fig. 14A bis 14C: zwei Flussdiagramme und eine Skizze zur Erläuterung von beispielhaften Messvorgängen.

Hierin beschriebene Aspekte basieren zum Teil auf der Erkenntnis, dass der Einsatz von mehreren Objektiven in Kombination mit einem optischen Spektrometer eine Erweiterung des erfassbaren Raumwinkelanteils bei der LIBS ermöglicht. Bei entsprechender Anordnung und Ausrichtung der Objektive kann ein erfasster Tiefenschärfebereich z. B. entlang der Strahlachse vergrößert werden (multifokales Konzept). Alternativ oder zusätzlich kann auch der Anteil des erfassten Plasmalichts, das von einem Plasma an einem Ort emittiert wird, vergrößert werden (multilaterales Konzept).

Die Erfinder haben erkannt, dass es mithilfe der hierin vorgeschlagenen Konzepte möglich ist, Plasmalicht über einen Sichtbereich entlang der Strahlachse zu erfassen, der länger ist als dieser mit nur einem einzelnen Objektiv unter vergleichbaren Bedingungen gegeben ist. Im Sichtbereich kann die Detektionseinheit eine Tiefenschärfe entlang eines laserseitig bereitgestellten Zündbereichs bereitstellen, die eine Toleranz hinsichtlich der Position der Probe und damit der Position des Plasmas auf der Oberfläche der Probe bewirkt. Anstelle eines Höhenausgleichs gemäß Stand der Technik durch ein mechanisches Verfahren der Detektionseinheit bzw. der Probe (oder ein mechanisches Anpassen der Probenoberfläche an einen Fokuspunkt/an einen punktförmigen Zündbereich) setzt das multifokale Konzept mehrere Plasmadetektionsbereiche ein, die entlang des laserseitig bereitgestellten Zündbereichs angeordnet sind.

Hierin wird ein Plasmadetektionsbereich bestimmt durch eine Beobachtungsachse und einen Raumwinkel, die einem Objektiv zugeordnet sind. Um insbesondere für mehrere Objektive vergleichbare Bedingungen zum Erfassen von Plasmalicht bereitzustellen (oder z. B. im Sinne eines symmetrisch umgesetzten Aufbaus einer Detektionseinheit), können die Beobachtungsachsen der verschiedenen Objektive unter einem im Wesentlichen gleichen Beobachtungswinkel auf die Strahlachse gerichtet werden, allerdings im Fall des multifokalen Konzepts in Richtung der Strahlachse versetzt.

Durch die gemäß dem hierin offenbarten multifokalen Konzept entlang der Strahlachse bereitgestellte Tiefenschärfe kann (ohne Nachpositionieren oder Regeln des Spektrometersystems) für Abschnitte des Oberflächenverlaufs der Probe im entsprechend abgedeckten Tiefenschärfenbereich Plasmalicht erfasst werden, das dann spektral aufgelöst in einem (gemeinsamen) optischen Spektrometer vermessen werden kann. Der erfassbare Signalbeitrag kann somit erhöht werden, wodurch der Messvorgang weniger Zeit benötigen kann, als wenn nur ein Objektiv zur Detektion in einem Plasmadetektionsbereich/an einer Position in Ausbreitungsrichtung eingesetzt wird.

Die Erfinder haben ferner beobachtet, dass beim Einsatz eines einzigen Objektivs zumindest vorübergehend eine räumliche Abschattung eines Detektionskegels und des in diesem zu erfassenden Plasmas vorliegen kann. Die Abschattung wird z. B. durch den Oberflächenverlauf der Probe im Raum hervorgerufen, wie er in der Umgebung des Plasmas vorliegt. Die Erfinder haben nun erkannt, dass es mithilfe mehrerer Objektive möglich wird, Plasmalicht, das in verschiedene Richtungen emittiert wird, zu erfassen und mit einem (gemeinsamen) optischen Spektrometer zu analysieren. Dadurch kann der Einfluss von Abschattungseffekten abgeschwächt werden.

Um vergleichbare Signalinformation aus jedem der Objektive zu erhalten, können in einer Ausführungsform möglichst gleiche (z. B. im Wesentlichen identische) Beobachtungswinkel der Objektive in Bezug zur Ausbreitungsrichtung des Laserstrahls vorgesehen werden. Bei einem räumlich größer ausgedehnten Plasma kann dies zusätzlich vermeiden, dass unterschiedliche Plasmabereiche mit möglicherweise unterschiedlichen spektralen Anteilen zu einem Signal zusammengefasst werden.

Die Erfinder haben ferner erkannt, dass in einer vorteilhaften Ausführungsform ein Lichtleitfaserbündel dazu eingesetzt werden kann, die Messanteile der verschiedenen Objektive zusammenzuführen und gemeinsam - an einem funktionellen Faserausgang des Lichtleitfaserbündels - durch einen Spalt eines optischen Spektrometers zur spektralen Analyse in das optische Spektrometer einzukoppeln. Dazu nehmen die Lichtleitfasern im Betrieb an einem Ende jeweils den Messanteil eines der Objektive auf. Am anderen Ende werden die Lichtleitfasern in einem optischen Stecker zusammengeführt und gehalten und bilden den gemeinsamen funktionellen Faserausgang. Bevorzugt geben die Lichtleitfasern die Messanteile zumindest zu großen Teilen auf die gleichen Zonen des Detektors ab, um möglichst hohe Signalstärken zu erreichen. Beispielsweise können die Lichtleitfasern ihre Messanteile am funktionellen Faserausgang in die gleiche Richtung abgeben. In einigen Ausführungsformen können dafür die Enden der Lichtleitfasern gleich ausgerichtet sein, insbesondere möglichst parallel verlaufen. Ferner können die Lichtleitfasern beispielsweise linear aufgereiht und im eingebauten Zustand entlang des Spalts ausgerichtet werden. Um einen möglichst lokalisierten Ort des funktionellen Faserausgangs und damit der Einkopplung der Messanteile in das optische Spektrometer zu erreichen, können die Lichtleitfasern im optischen Stecker nahe aneinander, bevorzugt direkt nebeneinander, verlaufen.

In einigen Ausführungsformen können die Enden der Lichtleitfasern im optischen Stecker unter Winkeln zueinander verlaufen, wobei die Winkel auf die Geometrie des Spektrometers (optischen Wege im Spektrometer) derart abgestimmt sind, dass die Messanteile der Objektive am Detektor des optischen Spektrometers zusätzlich möglichst in ihren Maxima - z. B. in Richtung der linearen Aufreihung - übereinander gelegt werden.

Nachfolgend werden in Verbindung mit den Figuren beispielhaft die verschiedenen erfinderischen Konzepte erläutert.

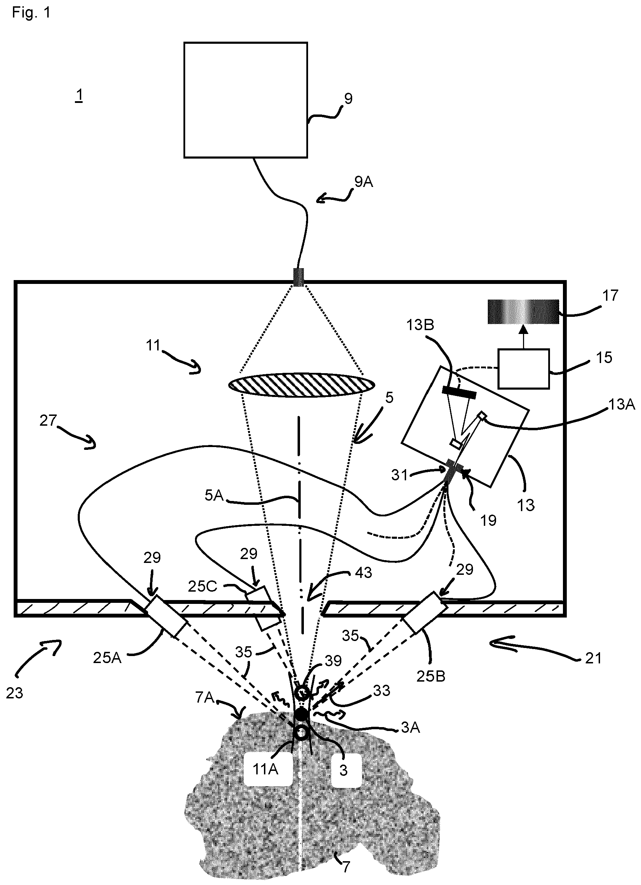

Fig. 1 zeigt eine schematische Übersicht eines Spektrometersystems 1 (LIBS-System) zur Spektralanalyse eines von einem laserinduzierten Plasma 3 (schematisch als gefüllter Kreis angedeutet) emittierten Plasmalichts 3A. Detektierbares Plasmalicht 3A liegt beispielsweise im Wellenlängenbereich von UV-Licht, sichtbarem Licht, nahem Infrarotlicht und/oder Infrarotlicht; insbesondere kann zu detektierendes Plasmalicht im Spektralbereich von ca. 190 nm bis ca. 920 nm liegen. Bei LIBS wird das Plasma 3 mit einem Laserstrahl 5 auf einer Oberfläche 7A einer Probe 7 erzeugt.

Zur Erzeugung des, z. B. gepulsten, Laserstrahls 5 umfasst das Spektrometersystem 1 eine Laserstrahlquelle 9. Die Laserstrahlquelle 9 ist dazu ausgebildet, für die Plasmaerzeugung benötigte Laserstrahlparameter bereitzustellen; beispielhafte Laserstrahlparameter für die Materialanalyse von Mineralien, Salzen, Fe- und NE-Metallen, o.ä. umfassen z. B. Laserpulsenergien im Bereich von <1 mJ bis >100 mJ, Laserpulsdauern im Bereich von <1ns bis >100 ns und eine zentrale Laserwellenlänge z. B. im Infrarot (IR)-Bereich (beispielsweise um 1064 nm), im Ultravioletten (UV)-Bereich oder in einem Wellenlängenbereich dazwischen oder in mehreren Wellenlängenbereichen, d.h. z. B. in einer Kombination aus mehreren Wellenlängen, sowie feste oder einstellbare Repetitionsraten oder Laserpulsburst-Einstellungen. Der Laserstrahl 5 wird z. B. über eine Lichtleitfaser 9A (optional optisch aktiv, wie spektral verbreiternd oder verstärkend) einer Fokussieroptik 11 zugeführt und von dieser auf die Oberfläche 7A der Probe 7 fokussiert. Die Fokussieroptik 11 kann insbesondere als eine Laserkopfkomponente mit Fokussierfunktion wie eine insbesondere auf das Spektrum oder die Pulsdauer oder die Pulsenergie einwirkende aktive Laserkomponente mit Fokussierfunktion ausgebildet sein. Die Ausbreitung des Laserstrahls 5 zwischen Fokussieroptik 11 und Probe 7 erfolgt entlang einer Strahlachse 5A. Beispielhafte Fokusdurchmesser (1/e²-Strahldurchmesser in der Strahltaille) im Bereich von <50 µm bis >250 µm und beispielhafte Fokuslängen (z. B. doppelte Rayleigh-Länge) liegen im Bereich von <5 mm bis >1.000 mm.

Laserparameter können insbesondere derart eingestellt/gewählt werden, dass sich ein Bereich, in dem Plasmaerzeugung stattfinden kann (auch als möglicher Zündbereich bezeichnet), beispielsweise über eine Länge im Bereich von ca. 0,2 mm bis ca. 50 mm, beispielsweise über eine Länge von 2 mm, 5 mm, 20 mm, 200 mm oder 500 mm, entlang der Strahlachse 5A erstreckt.

Fig. 1 zeigt schematisch eine entlang der Strahlachse 5A langgezogene Fokuszone 11A, wie sie im Bereich der Oberfläche 7A der Probe 7 ausgebildet wird. Das Plasma 3 bildet sich aufgrund der Wechselwirkung der Laserstrahlung mit dem Material an der Oberfläche der Probe 7A aus. Bei LIBS liegen übliche Ausmaße (gemittelter Durchmesser) eines Plasmas 3 im Bereich von z. B. 0,1 mm bis 5 mm (abhängig von Probenmaterial und Laserparameter).

Das Spektrometersystem 1 umfasst ferner ein optisches Spektrometer 13 zur Spektralanalyse des Plasmalichts 3A. Das optische Spektrometer 13 ist in Fig. 1 beispielhaft als Gitterspektrometer dargestellt. Allgemein umfasst das Spektrometer 13 mindestens ein dispersives Element 13A, z. B. ein Gitter, ein Prisma oder ein Gitterprisma, und einen pixelbasierten Detektor 13B, auf den das Plasmalicht spektral aufgeweitet auftrifft. Den Pixeln des Detektors 13B sind spektrale Komponenten des zu analysierenden Plasmalichts 3A zugeordnet. Der Detektor 13B gibt Intensitätswerte der bestrahlten Pixel an eine Auswerteeinheit 15, üblicherweise ein Computer mit einem Prozessor und einem Speicher, aus. Die Auswerteeinheit 15 gibt eine gemessene spektrale Verteilung 17 aus und vergleicht diese beispielsweise mit abgelegten Vergleichsspektren, um dem Plasmalicht 3A und damit der untersuchten Probe 3 die zum Plasmalicht 3A beitragenden Elemente zuzuordnen und als Ergebnis der spektralen Untersuchung auszugeben.

Im Spektrometer 13 ist ein (spektralabhängiger) Strahleingang für das zu analysierende Plasmalicht durch eine Eintrittsapertur 19, üblicherweise ein Eintrittsspalt 19A, festgelegt.

Das Spektrometersystem 1 umfasst ferner eine Detektionseinheit 21 mit einer Objektivhalterung 23 und mehreren Objektiven 25A, 25B, 25C, die von der Objektivhalterung 23 gehalten werden. Beispielhaft werden in den Figuren drei Objektive gezeigt, zwei in der Bildebene und eines dahinterliegend. Die hierin offenbarten Konzepte werden mit mehr als einem Objektiv in der Objektivhalterung 23 umgesetzt. Die Anzahl der verwendeten Objektive kann in Abhängigkeit räumlicher und optischer Parameter sowie Parameter des Materials der zu untersuchenden Probe ausgewählt werden; sie liegt z. B. im Bereich von 2 bis 20, beispielsweise bei 4, 5, 8, 9 oder 15 Objektiven.

Das Spektrometersystem 1, insbesondere die Detektionseinheit 21, umfasst ferner ein optisches Lichtleitsystem 27, das die Objektive 25A, 25B, 25C mit dem Spektrometer 13 optisch verbindet. Das Lichtleitsystem 27 stellt mehrere optische Eingänge 29, die jeweils optisch einem der Objektive 25A, 25B, 25C zugeordnet sind, und einen (den Objektiven gemeinsamen, funktionellen) optischen Ausgang 31, der optisch der Eintrittsapertur 19 zugeordnet ist, bereit.

Jedes der Objektive 25A, 25B, 25C ist zum Erfassen eines Messanteils 33 des Plasmalichts 3A eingerichtet und umfasst mindestens ein fokussierendes optisches Element (wie eine üblicherweise in einem lichtdichten Gehäuse angeordnete Sammellinse oder einen konkaven Spiegel). Jedem der Objektive 25A, 25B, 25C ist ein Detektionskegel 35 zugeordnet. Die Strahlachse 5A verläuft durch die Detektionskegel 35, wobei die Detektionskegel 35 im Bereich des Laserstrahls 5 eine eingestellte Mindestgröße aufweisen. Jeder der Detektionskegel 35 umfasst in einem Überlappungsbereich mit dem Laserstrahl 5 einen Plasmadetektionsbereich 39, der dem entsprechenden Objektiv 25A, 25B, 25C zugeordnet ist. Beispielsweise weisen die Detektionskegel 35 eine Länge von einer Eintrittsapertur eines Objektivs zum Laserstrahl im Bereich von 100 mm bis 500 mm auf. Beispielhaft wird in Fig. 1 das Plasma 3 im Plasmadetektionsbereich 39 des Objektivs 25B erzeugt, sodass der zugehörige Messanteil 33 des Plasmalichts 3A vom Objektiv 25B erfasst und auf den zugeordneten optischen Eingang 29 des Lichtleitsystems 27 abgebildet wird. Von einem oder mehreren Objektiven erfasste Messanteile 33 werden vom optischen Lichtleitsystem 27 zum gemeinsamen optischen Ausgang 31 geleitet und durch die Eintrittsapertur 19 in das optische Spektrometer 13 zur spektralen Analyse eingekoppelt.

Fig. 1 zeigt beispielhaft drei Objektive 25A, 25B, 25C, die (azimutal verteilt) um die Strahlachse 5A angeordnet sind. Die Objektive 25A und 25B liegen auf gegenüberliegenden Seiten der Strahlachse 5A und sind somit von gegenüberliegenden Seiten auf die Strahlachse 5A gerichtet. Das Objektiv 25C ist von hinten auf die Strahlachse 5A gerichtet. Ein weiteres Objektiv (in Fig. 1 nicht gezeigt) kann beispielsweise von vorne auf die Strahlachse 5A gerichtet sein oder mithilfe eines Strahlteilers entlang der Strahlachse 5A auf die Fokuszone 11A gerichtet sein. Zur Verdeutlichung sind in Fig. 1 die Detektionskegel 35 konisch auf die Strahlachse 5A zulaufend gestrichelt angedeutet, wobei die Fokuszone 11A, das Plasma 3 und die Plasmadetektionsbereiche 39 zur Verdeutlichung im Vergleich zu den Detektionskegeln 35 übergroß dargestellt sind.

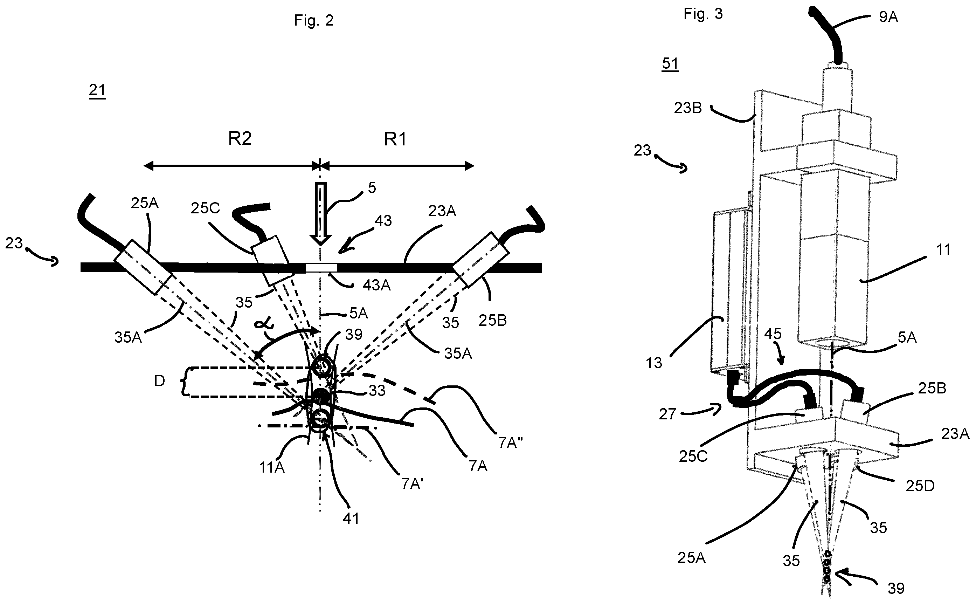

Fig. 2 zeigt eine Halterungsplatte 23A der Detektionseinheit 21 des LIBS-Systems zur Verdeutlichung der Anordnung und Ausrichtung der Objektive 25A, 25B, 25C. Zur ortsfesten Montage der Objektive weist die Halterungsplatte 23A Objektivhalterungsöffnungen zur Aufnahme der Objektive 25A, 25B, 25C auf. Die Objektivhalterungsöffnungen sind jeweils in einem radialen Abstand zur Strahlachse 5A angeordnet und für eine schräge Ausrichtung der Objektive 25A, 25B, 25C auf die Strahlachse 5A ausgebildet. Zur Verdeutlichung der schrägen Ausrichtung sind Beobachtungsachsen 35A der Objektive 25A, 25B, 25C dargestellt. Im gezeigten Beispiel verlaufen die Beobachtungsachsen 35A unter einem Beobachtungswinkel α zur Strahlachse 5A.

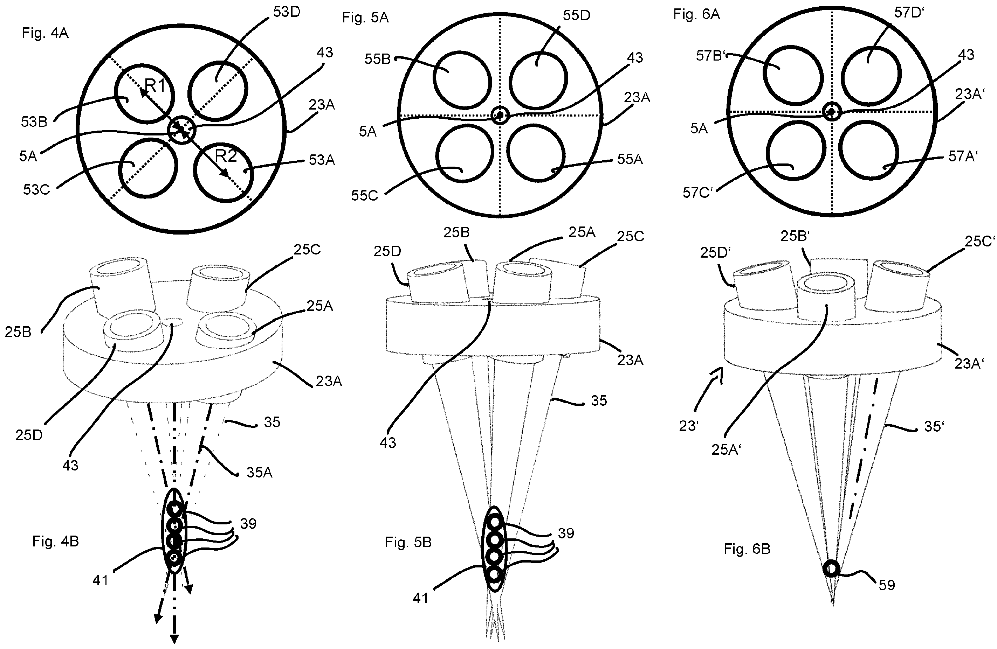

Zur Verwirklichung des multifokalen Konzepts sind die Objektive 25A, 25B, 25C derart in der Halterungsplatte 23A befestigt (allgemein in der Halterung 23 angeordnet und ausgerichtet), dass die Plasmadetektionsbereiche 39 entlang der Strahlachse 5A versetzt angeordnet sind. Insbesondere bei vergleichbaren Beobachtungswinkeln α kann der Versatz in Richtung der Strahlachse 5A durch Variation des radialen Abstands der Objektive 25A, 25B, 25C von der Strahlachse 5A (optional mit variierendem Einschub) erreicht werden. Beispielhaft sind unterschiedliche radiale Abstände R1 und R2 für die Objektive 25A und 25B in Fig. 2 angedeutet. Alternativ kann (optional bei einem vergleichbaren radialen Abstand) der Beobachtungswinkel zumindest einiger der Objektive an den gewünschten Versatz der Plasmadetektionsbereiche 39 in Richtung der Strahlachse 5A angepasst werden (siehe z. B. Fig. 5B). Mischformen in der Konfiguration sind ebenfalls möglich.

Allgemein kann der Beobachtungswinkel α im Bereich von 0° (über Strahlteiler entlang des Laserstrahls) bis 90° (Beobachtung orthogonal zum Laserstrahl) liegen. Die im Rahmen der Offenbarung beispielhaft gezeigten Beobachtungswinkel α liegen im Bereich von 3° bis 60°, beispielsweise im Bereich von 5° bis 25°. Die Beobachtungsachsen 35A benachbarter Objektive 25A, 25B, 25C laufen von verschiedenen azimutalen Richtungen her auf die Strahlachse 5A zu (azimutaler Winkel in der Ebene senkrecht zur Strahlachse 5A). Im in Fig. 2 gezeigten Fall sind die Beobachtungswinkel α für alle Objektive vergleichbar und weichen nicht mehr als z. B. 5° oder 1° voneinander ab (Abweichung gegeben z. B. durch erlaubte Fertigungstoleranzen der Objektivhalterungsöffnungen und Objektive). Jedoch variieren in der Anordnung der Fig. 2 die radialen Abstände zur Strahlachse 5A. Entsprechend können vergleichbare Spektren von den Plasmadetektionsbereichen 39 der verschiedenen Objektive für eine Probe bei verschiedenen Lagen der Oberfläche der Probe entlang der Strahlachse 5A (entsprechend unterschiedlichen Messkonstellationen im Rahmen eines Messvorgangs) aufgenommen werden, zum Beispiel vom Objektiv 25B bei einem Oberflächenverlauf gemäß der durchgezogenen Linie (Oberfläche 7A der Probe 7 aus Fig. 1) oder vom Objektiv 25A im Fall eines Oberflächenverlaufs gemäß der strichpunktierten Linie 7A' oder vom Objektiv 25C im Fall eines Oberflächenverlaufs gemäß der gestrichelten Linie 7A".

Wie in Fig. 2 angedeutet bilden die Plasmadetektionsbereiche 39 zusammen einen Sichtbereich 41 der Detektionseinheit 21 aus. Der Sichtbereich 41 erstreckt sich entlang der Strahlachse 5A im Bereich der Fokuszone 11A.

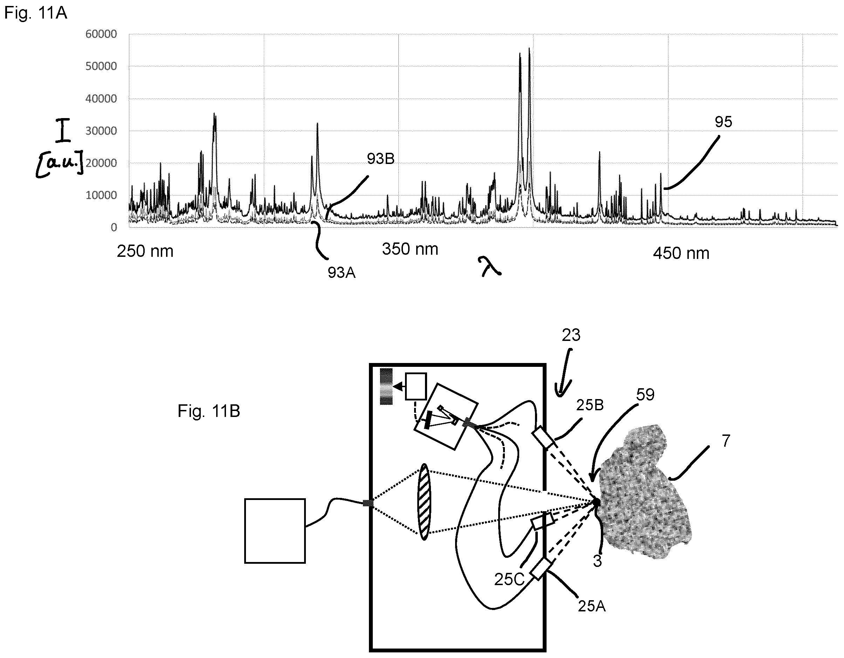

Jedem der Plasmadetektionsbereiche 39 wird eine Messtiefe entlang der Strahlachse 5A zugeordnet. Die Messtiefe entspricht in Fig. 2 z. B. einem Durchmesser der Kreise, die die Plasmadetektionsbereiche 39 verdeutlichen. Für ein Objektiv ist die Messtiefe ein spezifisches Merkmal, das gegeben ist durch optische Parameter wie Fokuslänge und Apertur des Objektivs sowie durch die Anordnung und Ausrichtung des Objektivs (z. B. geometrische Lageparameter des Objektivs bezüglich der Strahlachse 5A - Abstand und Winkel). Beispielsweise können sich die Plasmadetektionsbereiche 39 entlang der Strahlachse 5A jeweils über eine Messtiefe von ca. 0,1 mm bis ca. 15 mm, insbesondere über eine Messtiefe von ca. 0,5 mm bis ca. 10 mm oder von ca. 0,5 mm bis ca. 5 mm. In einigen Ausführungsformen können sich die Plasmadetektionsbereiche 39 entlang der Strahlachse 5A über 1/10 bis 1/4 des Sichtbereichs 41 erstrecken. In Fig. 2 sind die beim multifokalen Konzept versetzt angeordneten Plasmadetektionsbereiche 39 entlang der Strahlachse 5A beispielhaft in einem Abstand D in der Größenordnung der Messtiefe (hier ca. dem Doppelten des Durchmessers der Plasmadetektionsbereiche 39) beabstandet angeordnet. Alternativ können die Plasmadetektionsbereiche 39 aneinander angrenzen oder sich teilweise (beispielsweise im Bereich von 10 % der Messtiefe) überlappen. Auf diese Weise können die Objektive Plasmalicht aus unterschiedlichen Abschnitten des Sichtbereichs 41 entlang der Strahlachse 5A detektieren. (Im Unterschied hierzu decken Plasmadetektionsbereiche beim multilateralen Konzept im Wesentlichen den gleichen Abschnitt entlang der Strahlachse 5A ab, sodass die Objektive Plasmalicht aus diesem gleichen Abschnitt detektieren. Siehe hierzu beispielsweise Fig. 11B mit zugehöriger Beschreibung.)

Ferner erkennt man in Fig. 2 ein optionales Schutzfenster 43A, das im Bereich einer optischen Durchgangsöffnung 43 in der Halterungsplatte 23A vorgesehen werden kann, um den Laserstrahl durch die Halterung 23 und an den Objektiven 25A, 25B, 25C vorbei auf die Probe 7 richten zu können.

Fig. 3 zeigt eine perspektivische Ansicht eines beispielhaften LIBS-Messkopfs 51, der über eine Lichtleitfaser 9A mit einer Laserstrahlquelle verbunden ist. Die Halterung 23 des LIBS-Messkopfs 51 umfasst eine Längsträgerplatte 23B, an der eingangsseitig eine Befestigung für die Lichtleitfaser 9A und die Fokussieroptik 11 (Laserkopf mit Strahlformung) vorgesehen ist. An der Längsträgerplatte 23B ist ferner das optische Spektrometer 13 befestigt sowie die Halterungsplatte 23A für die vier Objektive 25A, 25B, 25C, 25D (allgemein eine n>1-fache Eintrittsoptik) vorgesehen. Die Objektive 25A, 25B, 25C, 25D sind dazu eingerichtet, von Plasmadetektionsbereichen 39, die entlang der Strahlachse 5A versetzt zueinander angeordnet sind, Messanteile von Plasmalicht zu erfassen und über das Lichtleitsystem 27 (beispielsweise ein Faserbündel mit n>1 Eingängen und einem funktionellen Ausgang - "n-auf-1-Faserbündel") dem Spektrometer 13 zur spektralen Analyse zuzuführen. Beispielhaft sind in Fig. 3 zwei Lichtleitfasern 45 des Lichtleitsystems 27 dargestellt, die die Objektive 25B und 25C mit dem gemeinsamen Spektrometer 13 optisch verbinden. Mit dem Lichtleitsystem 27 können die Messanteile im Spektrometer 13 (oder optional vor Einkopplung in das Spektrometer 13) für einen Messvorgang kombiniert werden.

Die n-fache Betrachtung des Sichtbereichs mit mehreren (in Fig. 3 vier) Objektiven erlaubt eine deutliche Vergrößerung der Tiefenschärfe, gegeben durch die Aneinanderreihung der Plasmadetektionsbereiche der Objektive. Dadurch wird es möglich, auch in der Oberfläche strukturierte, ungleichmäßige Proben effizient zu analysieren. Ferner findet eine Betrachtung der Probe aus unterschiedlichen Winkeln statt, wodurch Abschattungseffekte reduziert werden können. Die erfassten Messanteile werden an einem gemeinsamen Ausgang des Lichtleitsystems zusammengeführt (Summe aller Beobachtungen) und einer gemeinsamen spektralen Analyse zugeführt.

Ein n-auf-1-Faserbündel erlaubt eine Einspeisung mehrerer Objektive in ein Spektrometer, wobei mehrere n-auf-1-Bündel für die Einspeisung in mehrere Spektrometer verwendet werden können.

Die beispielhafte Implementierung des multifokalen Konzepts in der in Fig. 2 gezeigten Detektionseinheit wird anhand der Figuren 4A und 4B weiter verdeutlicht. Fig. 4A zeigt eine Aufsicht auf die Halterungsplatte 23A. Die optische Durchgangsöffnung 43 im Zentrum ermöglicht den Durchtritt des Laserstrahls (Laserstrahlachse 5A). Vier Objektivhalterungsöffnungen 53A, 53B, 53C, 53D sind azimutal um die Durchgangsöffnung 43 mit variierenden radialen Abständen zur Strahlachse 5A angeordnet. Sie sind azimutal gleich verteilt, sodass sich je zwei Objektivhalterungsöffnungen paarweise gegenüber liegen. In der perspektivischen Ansicht der Fig. 4B sind vier identische Objektive 25A, 25B, 25C, 25D in die Objektivhalterungsöffnungen 53A, 53B, 53C, 53D eingesetzt. Die Objektive 25A, 25B, 25C, 25D wurden unterschiedlich weit in die Objektivhalterungsöffnungen 53A, 53B, 53C, 53D eingeführt, sodass je nach radialem Abstand die zugehörigen Plasmadetektionsbereiche 39 nebeneinander in Richtung der Strahlachse angeordnet sind und so den durch die Tiefenschärfe gegebenen Sichtbereich 41 der Detektionseinheit 21 ausbilden.

Eine alternative Implementierung des multifokalen Konzepts wird in den Figuren 5A und 5B verdeutlicht. In der Aufsicht auf die Halterungsplatte 23A erkennt man vier Objektivhalterungsöffnungen 55A, 55B, 55C, 55D, die symmetrisch im gleichen radialen Abstand zur Durchgangsöffnung 43 und um diese beispielhaft gleich verteilt angeordnet sind. Wie in der perspektivischen Ansicht der Fig. 5B angedeutet ist, wird der Versatz der Plasmadetektionsbereiche 39 in Richtung der Strahlachse 5A durch unterschiedliche Beobachtungswinkel der eingesetzten Objektive 25A, 25B, 25C, 25D bewirkt. Beispielsweise können die Beobachtungswinkel bei einem radialen Abstand von 30 mm im Bereich von 3° bis 15° liegen, sodass sich der Sichtbereich 41 in einem Abstand von ca. 100 mm von der Halterungsplatte 23A ausbildet. Bei unterschiedlichen Beobachtungswinkel (und optional Betrachtungshöhen) können bei einem großvolumigen Plasma die detektierten spektralen Verteilungen variieren. Insbesondere jedoch bei einem kleinvolumigen Plasma, wie es meist für die LIBS erzeugt wird, sind diese Unterschiede in der spektralen Verteilung vernachlässigbar, da im Wesentlichen das gesamte Plasma in einem Plasmadetektionsbereich 39 liegt.

Eine beispielhafte Implementierung des multilateralen Konzepts wird in den Figuren 6A und 6B verdeutlicht. In der Aufsicht der Fig. 6A auf eine beispielhafte Halterungsplatte 23A' einer Objektivhalterung 23' erkennt man, ähnlich wie in Fig. 5A, vier Objektivhalterungsöffnungen 57A', 57B', 57C', 57D', die in der Halterungsplatte 23A' vorgesehen sind. Die Objektivhalterungsöffnungen 57A', 57B', 57C', 57D' sind symmetrisch im gleichen radialen Abstand zur Durchgangsöffnung 43 angeordnet. Im Fall der Fig. 6A sind sie beispielhaft gleichverteilt angeordnet, d. h., sie liegen sich paarweise gegenüber. Die Objektivhaltung stellt ferner eine optische Durchgangsöffnung 43 bereit, durch die die Strahlachse 5A verläuft. Insbesondere wurde eine Lage der Strahlachse 5A mittig in der optischen Durchgangsöffnung 43 gelegt.

Wie in Fig. 6B gezeigt, werden Objektive 25A', 25B', 25C', 25D' in den Objektivhalterungsöffnungen 57A', 57B', 57C', 57D' der Objektivhalterung 23' gehalten. Im Unterschied zur Ausrichtung der Objektive 25A, 25B, 25C, 25D in Fig. 5B sind im Rahmen des multilateralen Konzepts die Objektive 25A', 25B', 25C', 25D' unter einem im Wesentlichen identischen Beobachtungswinkel auf die Strahlachse gerichtet, sodass sie einen gemeinsamen Plasmadetektionsbereich 59 ausbilden. Jedem der Objektive 25A', 25B', 25C', 25D' ist ein Detektionskegel 35' zugeordnet, wobei die Objektive 25A', 25B', 25C', 25D' derart in der Objektivhalterung angeordnet und ausgerichtet sind, dass die Detektionskegel 35' in einem Überlappungsbereich mit dem Laserstrahl einen gemeinsamen Plasmadetektionsbereich 59 ausbilden. D. h., im Fall eines im Plasmadetektionsbereich 59 vorliegenden Plasmas ist von jedem der vier Objektive 25A', 25B', 25C', 25D' ein Messanteil des Plasmalichts erfassbar, wobei die Detektionskegel 35' in unterschiedliche Raumwinkel emittierte Messanteile des Plasmalichts des Plasmas erfassen. Jeder der Detektionskegel 35' erstreckt sich entlang einer Beobachtungsachse 35A', die unter einem Beobachtungswinkel im Bereich bis 90° (Beobachtung orthogonal zum Laserstrahl) zur Strahlachse 5A verläuft. Die im Rahmen der Offenbarung beispielhaft gezeigten Beobachtungswinkel liegen im Bereich von 1° bis 60°. Die Beobachtungswinkel sind im Wesentlichen gleich (innerhalb beispielsweise 1° oder 2° z. B. fertigungsbedingter Toleranz) oder können voneinander abweichen, beispielsweise um aus unterschiedlichen Richtungen zu beobachten (Beobachtungswinkelunterschiede bis zu 90° beispielsweise bis zu 45°).

Man erkennt in Fig. 6B, dass die Beobachtungsachsen 35A' benachbarter Objektive 25A', 25B', 25C', 25D' azimutal beabstandet um die Strahlachse angeordnet sind. So liegen die die Beobachtungsachsen 35A' der Objektive 25A', 25B', 25C', 25D' beispielsweise auf einer Kegeloberfläche.

Weitere Erläuterungen zum multilateralen Konzept folgen in Zusammenhang mit den Figuren 11A bis 12B.

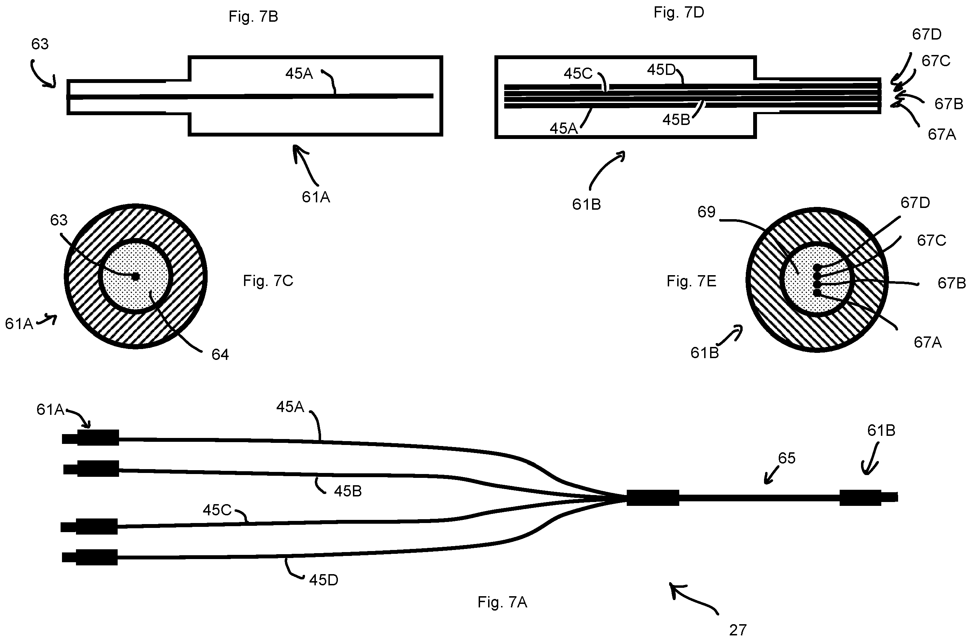

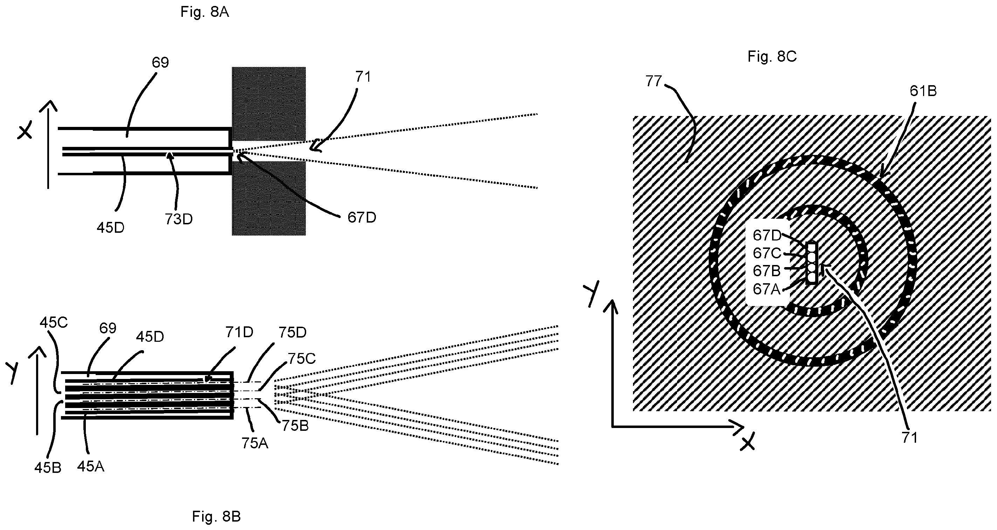

In den hierin vorgeschlagenen Spektrometersystemen zur multifokalen und/oder multilateralen Beobachtung wird allgemein ein Lichtleitsystem verwendet, um Messanteile des erfassten Plasmalichts von der Detektionseinheit zum optischen Spektrometer zu führen. Neben dem nachfolgend in Zusammenhang mit den Figuren 7A bis 7E sowie 8A bis 8C erläuterten, auf mehreren Lichtleitfasern basierenden Lichtleitsystemen können die Messanteile ferner beispielsweise über ein Freistrahl-System unter Einsatz von zum Beispiel Spiegeln und Linsen von den Objektiven zur Eingangsapertur des optischen Spektrometers geführt werden. Alternativ können Lichtleitsysteme zum Beispiel auf mehreren Lichtleitfasern basieren, die ausgangsseitig zu einer Faser zusammengeführt werden.

Die schematischen Skizzen der Figuren 7A bis 7E verdeutlichen ein beispielhaftes Lichtleitsystem 27 mit mehreren Lichtleitfasern 45A, 45B, 45C, 45D, die dazu ausgebildet sind, in lichtführenden Bereichen die Messanteile des erfassten Plasmalichts zum optischen Spektrometer zu führen. Beispielhafte Lichtleitfasern sind auf die zu führenden Spektralbereiche (UV, VIS, IR, NIR) angepasst und können beispielsweise folgende Arten von Lichtleitfasern umfassen: Stufenindexfasern, Gradientenindexfasern, Hohlkernfasern, Photonic-crystal-Fasern sowie single-Mode-Fasern oder multi-Mode-Fasern. Durchmesser der lichtführenden Bereiche liegen z. B. im Bereich von 100 µm bis 1.000 µm, insbesondere im Bereich um 800 µm. Zugeordnete Lichteintrittsflächen/ Lichtaustrittsflächen haben vergleichbare Ausmaße. Ferner sind Variationen im Durchmesser eines lichtführenden Bereichs zwischen Lichteintrittsfläche und Lichtaustrittsfläche möglich, wie nachfolgend an einem Beispiel erläutert wird.

Jede der Lichtleitfasern ist eingangsseitig in einem optischen Eingangsstecker 61A, beispielsweise in einem SMA-Stecker, fixiert (Figuren 7B und 7C). Die lichtführenden Bereiche der Lichtleitfasern 45A, 45B, 45C, 45D weisen eingangsseitig jeweils eine Lichteintrittsfläche 63 auf. Beispielhaft ist in Fig. 7C in einer Frontansicht des Eingangssteckers 61A die Lichteintrittsfläche 63 zentriert in einer rotationssymmetrischen Ferrule 64 angedeutet. Jede der Lichteintrittsflächen 63 bildet einen der optischen Eingänge 29 des Lichtleitsystems 27. Der Eingangsstecker 61A kann an einem der Objektive der Detektionseinheit derart montiert werden, dass einer der Messanteile in den lichtführenden Bereich eingekoppelt wird. Dazu wird die Lichteintrittsfläche 63 so positioniert, dass ein Objektiv, das aus dem Plasmadetektionsbereich in Richtung des Objektivs emittiertes (d. h., sich im Detektionskegel ausbreitendes) Plasmalicht erfasst, dieses auf die Lichteintrittsfläche 63 abbildet, so dass es von der Lichtleitfaser weitergeleitet werden kann.

Wie in Fig. 7A gezeigt können die Lichtleitfasern 45A, 45B, 45C, 45D ausgangsseitig zu einem Faserbündelabschnitt 65 zusammengefasst werden.

Ausgangsseitig werden die Lichtleitfasern 45A, 45B, 45C, 45D, die im multifokalen Konzept sowie im multilateralen Konzept jeweils einem Objektiv zugeordnet werden, in einem (gemeinsamen) Ausgangsstecker 61B gefasst (Figuren 7D und 7E). Die lichtführenden Bereiche der Lichtleitfasern 45A, 45B, 45C, 45D weisen ausgangsseitig jeweils eine Lichtaustrittsfläche 67A, 67B, 67C, 67D auf. Die Lichtaustrittsflächen 67A, 67B, 67C, 67D bilden den optischen (funktionellen) Ausgang 31 des Lichtleitsystems 27. Wie in Fig. 7E gezeigt, werden die Lichtleitfasern 45A, 45B, 45C, 45D im Ausgangsstecker 61B weitgehend parallel zu einander verlaufend in einer Ferrule 69 gefasst. Beispielsweise werden in der Ferrule 69 Faseraufnahmeöffnungen vorgesehen, die parallel zueinander verlaufen und an den Außendurchmesser der Lichtleitfasern 45A, 45B, 45C, 45D angepasst sind. Vorzugsweise werden die Lichtleitfasern 45A, 45B, 45C, 45D derart angeordnet, dass die Lichtleitfasern 45A, 45B, 45C, 45D aneinander angrenzend oder mit einem Zwischenabstand von wenigen Prozent, z. B. 10 %, 20 %, 30 % oder 100 %, eines Durchmessers der Lichtleitfasern 45A, 45B, 45C, 45D, in der Ferrule 69 fixiert sind. Wie in der Frontansicht des Ausgangssteckers 61B in Fig. 7E gezeigt wird, können die Lichtaustrittsflächen 67A, 67B, 67C, 67D beispielsweise nebeneinander (linear) aufgereiht angeordnet werden, um den optischen Ausgang 31 geometrisch für eine effiziente Einkopplung an eine spaltförmige Eintrittsapertur des optischen Spektrometers anzupassen.

Die Figuren 8A bis 8C zeigen, wie der Ausgangsstecker 61B für eine effiziente Lichteinkopplung der Messanteile am optischen Spektrometer 13 montiert werden kann. Beispielhaft sind wie in Fig. 7E die Lichtaustrittsflächen 67A, 67B, 67C, 67D linear aufgereiht und entlang einer in Y-Richtung verlaufenden Eintrittsspaltöffnung 71 ausgerichtet. Entsprechend ist eine Position der Einkopplung in X-Richtung durch eine Breite der Eintrittsspaltöffnung 71 gegeben. Die Position der Einkopplung in Y-Richtung wird durch die in Y-Richtung übereinander liegenden Lichtaustrittsflächen 67A, 67B, 67C, 67D gegeben. Je näher die Lichtaustrittsflächen 67A, 67B, 67C, 67D beieinander liegen, desto mehr überlappen sich die optischen Wege der Messanteile im optischen Spektrometer und führen zu gleichlokalisierten Signalbeiträgen auf dem Detektor.

In einigen Ausführungsformen entspricht die Reihenfolge der Lichtaustrittsflächen 67A, 67B, 67C, 67D der Abfolge der Plasmadetektionsbereiche 39 im Sichtbereich 41. Dadurch werden die zentral liegenden Plasmadetektionsbereiche 39 optimal in das optische Spektrometer eingekoppelt, sodass die zugehörigen Messanteile am effizientesten zur spektralen Analyse beitragen. Bezugnehmend auf die Beispiele zum multifokalen Konzept in Fig. 4B und Fig. 5B können die mittleren Lichtleitfasern im Ausgangsstecker auch für die mittleren Plasmadetektionsbereiche 39 verwendet werden. Bezugnehmend auf das Beispiel zum multilateralen Konzept der Fig. 6B ist die Summe der Messanteile aller jeweils beitragenden Lichtleitfasern ausschlaggebend, wobei je nach Oberflächenverlauf jeweils andere Lichtleitfasern beitragen, sodass eine entsprechende Abfolge im Allgemeinen wohl weniger bis keinen Effekt haben wird.

In einer schematisierten Aufsicht auf einen Schnitt durch die "oberste" Lichtleitfaser 45D (Fig. 8A), einer schematisierten Seiteneinsicht eines Schnitts durch die vier aufgereihten Lichtleitfasern 45A, 45B, 45C, 45D (Fig. 8B) und einer Ansicht der Lichtaustrittsflächen 67A, 67B, 67C, 67D der Lichtleitfasern im montierten Zustand (Fig. 8C) wird die Einkopplung durch eine Eintrittsspaltöffnung 71 in ein optisches Spektrometer verdeutlicht. In Fig. 8A erkennt man die in der Ferrule 69 gehaltene Lichtleitfaser 45D. Im Inneren der Lichtleitfaser 45D erstreckt sich der lichtführende Bereich 73D (schematisch angedeutet), der in der Lichtaustrittsfläche 67D mündet. Aus dieser tritt der Messanteil des erfassten Plasmalichts aus und passiert die längliche Eintrittsspaltöffnung 71 (Spaltbreite z. B. 10µm). Punktiert ist in Fig. 8A eine mögliche Strahldivergenz in X-Richtung aufgrund der Spaltöffnung 71 angedeutet.

In der Schnittansicht der Fig. 8B erkennt man die vier in Y-Richtung übereinander in der Ferrule 69 angeordneten Lichtleitfasern 45A, 45B, 45C, 45D, jeweils mit einem zentral verlaufenden lichtführenden Bereich; angedeutet ist der lichtführende Bereich 73D für die Lichtleitfaser 45D. Ferner erkennt man (Messanteil-) Strahlachsen 75A, 75B, 75C, 75D, entlang denen die Messanteile des Plasmalichts aus den Lichtleitfasern 45A, 45B, 45C, 45D abgegeben werden. Die Strahlachsen 75A, 75B, 75C, 75D verlaufen beispielhaft parallel zueinander. Dies bewirkt, dass die Messanteile im Wesentlichen in die gleiche Richtung und mit vergleichbaren Divergenzen in Y-Richtung durch die Eintrittsspaltöffnung 71 treten und somit als quasi ein Lichtstrahl auf das dispersive Element und den Detektor zur spektralen Analyse treffen.

In Fig. 8C erkennt man schematisch die Eintrittsspaltöffnung 71 in einer Innenwand 77 des Gehäuses des Spektrometers. Im gezeigten Beispiel sind die Lichtleitfasern (mit parallelen Faserorientierungen) linear aufgereiht, wobei die Aufreihung entlang einer Längsachse der Eintrittsspaltöffnung 71 (hier entlang der Y-Richtung) vorliegt. Der Durchmesser der Lichtaustrittsflächen 67A, 67B, 67C, 67D ist üblicherweise größer oder liegt im Bereich einer Breite der Eintrittsspaltöffnung 71. Ferner ist in Fig. 8C der Ausgangsstecker 61B (außerhalb des Gehäuses) schematisiert angedeutet.

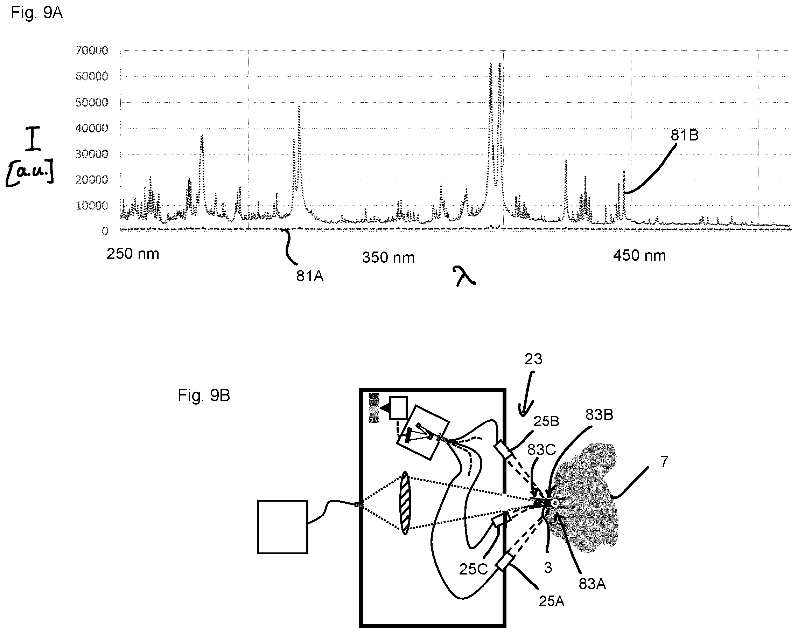

Bezugnehmend auf die Figuren 9A bis 10B wird das multifokale Konzept anhand beispielhafter Messkonstellationen und Messspektren erläutert.

Fig. 9A zeigt zwei Messspektren im Wellenlängenbereich von ca. 250 nm bis ca. 500 nm und Fig. 9B verdeutlicht beispielhaft die Konstellation bei der LIBS-Messung mit dem Spektrometersystem 1 aus Fig. 1. Mit dem Laserstrahl wird das Plasma 3 auf der Oberfläche der Probe 7 erzeugt. Die Detektionseinheit 23 des Spektrometersystems 1 ist derart eingestellt, dass die Messdetektionsbereiche der einzelnen Objektive nicht überlappen. Man erkennt, dass ein Messdetektionsbereich 83A des Objektivs 25A im Inneren der Probe 7 liegt (und entsprechend das Objektiv 25A "nur" die Probenoberfläche in einiger Entfernung zum Plasma beobachtet), der Messdetektionsbereich 83B des Objektivs 25B auf der Oberfläche der Probe 7 liegt (und das Objektiv 25B entsprechend die Probenoberfläche im Bereich der Plasmaausbildung beobachtet und damit direkt in das Plasma schaut), und der Messdetektionsbereich 83C des Objektivs 25C nicht mit der Probe 7 überlappt (und entsprechend das Objektiv 25C über das Plasma hinwegschaut und ebenfalls "nur" die Probenoberfläche in einiger Entfernung zum Plasma beobachtet).

Im dargestellten Fall ist das erzeugte Plasma 3 in seiner Ausdehnung vergleichbar mit der Ausdehnung der Messdetektionsbereiche der Objektive, sodass das Plasma 3 im Wesentlichen nur im Messdetektionsbereich 83B vorliegt und entsprechend nur in den Detektionskegel des Objektivs 25B Licht emittiert. Dies erkennt man auch an den Messspektren, die zur Verdeutlichung selektiv für die Messanteile der Objektive 25A und 25B in Fig. 9A gezeigt sind. Der Messanteil des Objektivs 25A führt zu kaum Signalbeiträgen. Entsprechend führt der Messanteil zu einem Messspektrum mit sehr geringen Intensitäten I (gestrichelte Linie 81A). Es wird angemerkt, dass sich für das Objektiv 25C ein Messspektrum ähnlich dem des Objektivs 25A ergeben würde. Davon abweichend führt der Messanteil des Objektivs 25B zu einer spezifischen Signalverteilung mit signifikanten Intensitäten I bei spezifischen Wellenlängen λ im Messspektrum (gepunktete Linie 81B). Diese lassen eine Zuordnung der elementaren Komponenten der Probe 7 ermitteln. Es wird angemerkt, dass um die Messanteile selektiv erfassen und darstellen zu können, jeweils nur das zu vermessende Objektiv mit dem Spektrometer optisch zu verbinden ist.

Werden erfindungsgemäß alle Objektive mit dem Spektrometer zur Verwirklichung des multifokalen Konzepts optisch verbunden, wird im vorliegenden Fall der Fig. 9B das Summensignal in etwa dem Messanteil des Objektivs 25B entsprechen (gepunktete Linie 81B), da zum Zeitpunkt der Messung in Fig. 9B die Messdetektionsbereiche 83A, 83C des Objektivs 25A und des Objektivs 25C in der Probe 7 bzw. vor der Probe 7 liegen. Dadurch erfasst im Wesentlichen nur das Objektiv 25A einen Messanteil des Plasmas 3.

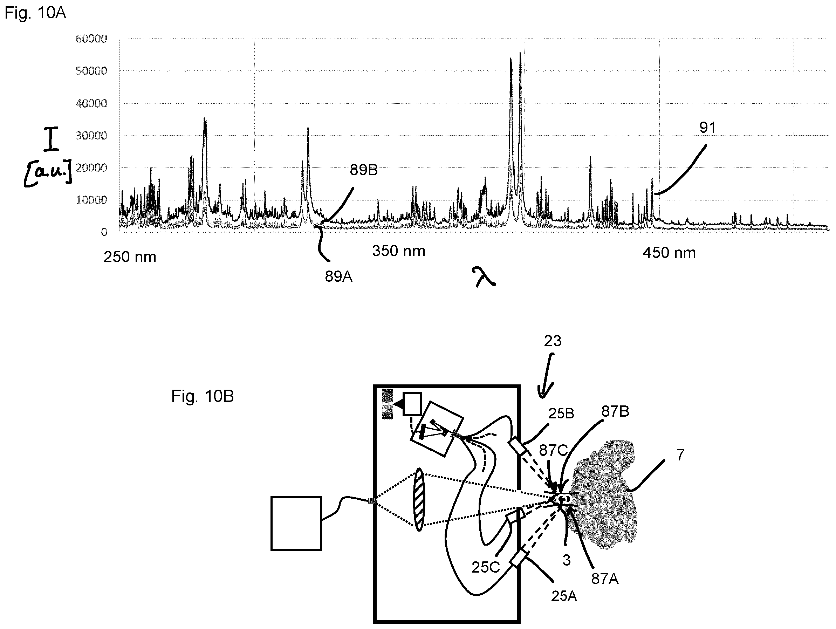

Fig. 10A zeigt drei Messspektren im Wellenlängenbereich von ca. 250 nm bis ca. 500 nm und Fig. 10B verdeutlicht beispielhaft die Konstellation bei einer LIBS-Messung, bei der die Detektionseinheit 23 des Spektrometersystems derart eingestellt ist, dass benachbarte Messdetektionsbereiche der einzelnen Objektive zu einem Teil überlappen. Man erkennt, dass der Messdetektionsbereich 87A des Objektivs 25A und der Messdetektionsbereich 87B des Objektivs 25B nahe der Oberfläche der Probe 7 liegen, wobei der Messdetektionsbereich 87C des Objektivs 25C etwas weiter entfernt vor der Probe 7 liegt. Mit dem Laserstrahl wird das Plasma 3 auf der Oberfläche der Probe 7 erzeugt. Das Plasma 3 erstreckt sich im Beispiel der Fig. 10B über die Messdetektionsbereich 87A, 87B des Objektivs 25A und des Objektivs 25B.

Die Situation der sich ergebenden Messspektren ist in Fig. 10A gezeigt, wobei auch hier die Messspektren für das Objektiv 25A und das Objektiv 25B zur Verdeutlichung selektiv dargestellt sind. Der Messanteil des Objektivs 25C führt zu kaum Signalbeiträgen und ist in Fig. 10A nicht gezeigt. Man erkennt, dass das Plasma 3 vergleichbar mit dem Messdetektionsbereich 87A und dem Messdetektionsbereich 87B überlappt. Entsprechend führen die Messanteile des Objektivs 25A und des Objektivs 25B zu vergleichbaren Messspektren mit signifikanten Intensitäten I bei spezifischen Wellenlängen λ im Messspektrum (gestrichelte Linie 89A, gepunktete Linie 89B). Es wird angemerkt, dass um die Messanteile selektiv erfassen und darstellen zu können, jeweils nur das zu vermessende Objektiv mit dem Spektrometer optisch zu verbinden ist.

Werden erfindungsgemäß alle Objektive mit dem Spektrometer zur Verwirklichung des multilateralen Konzepts optisch verbunden, ergibt sich in der beispielhaften Konstellation der Fig. 10B ein kombiniertes Summensignal (durchgezogene Linie 91), indem die signifikanten Intensitäten I bei spezifischen Wellenlängen λ gut auflösbar sind.

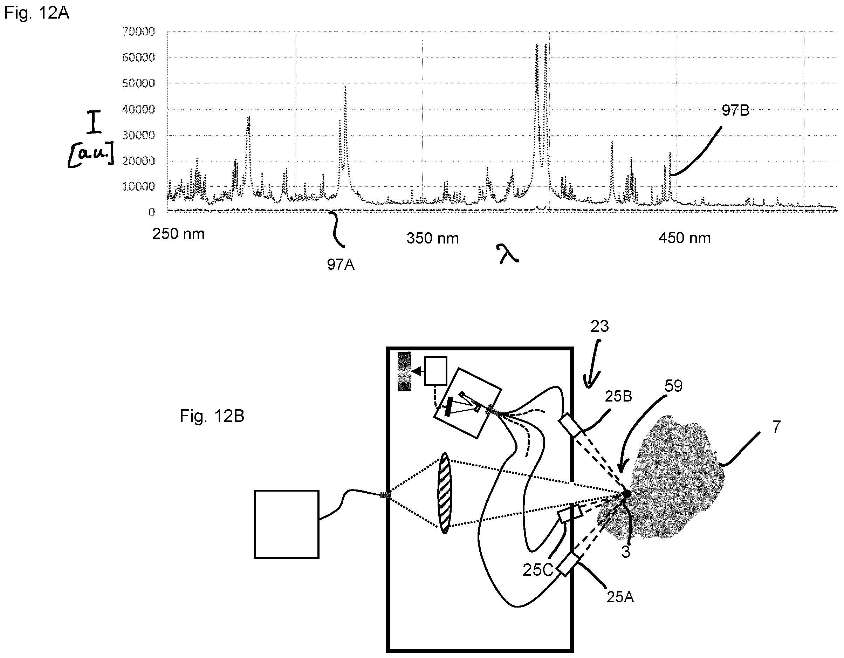

Bezugnehmend auf die Figuren 11A bis 12B wird das multilaterale Konzept anhand beispielhafter Messdaten erläutert, wobei Fig. 11B den Vorteil eines größeren erfassten Raumwinkelbereichs und Fig. 12B den Vorteil bei eintretenden Abschattungen aufgrund der multilateralen Beobachtung aufzeigt.

Fig. 11A zeigt drei Messspektren im Wellenlängenbereich von ca. 250 nm bis ca. 500 nm und Fig. 11B verdeutlicht beispielhaft die Konstellation bei einer LIBS-Messung, bei der - wie in Fig. 6B gezeigt - die Detektionseinheit 23 des Spektrometersystems derart eingestellt ist, dass die Messdetektionsbereiche der einzelnen Objektive aufeinander fallen und einen gemeinsamen Messdetektionsbereich 59 ausbilden. Dabei wird der Messdetektionsbereich 59 mit den verschiedenen Objektiven aus verschiedenen Raumrichtungen erfasst. Man erkennt, dass der Messdetektionsbereich 59 nahe der Oberfläche der Probe 7 liegt. Mit dem Laserstrahl wird das Plasma 3 auf der Oberfläche der Probe 7 im Bereich des Messdetektionsbereichs 59 erzeugt.

Die Situation der sich ergebenden Messspektren ist in Fig. 11A gezeigt, wobei auch beispielhaft die (vergleichbaren) Messspektren (gestrichelte Linie 93A, gepunktete Linie 93B) für das Objektiv 25A und das Objektiv 25B zur Verdeutlichung selektiv dargestellt sind. Der Messanteil des Objektivs 25C führt zu einem vergleichbaren Signalbeitrag und ist nicht gezeigt. Es wird angemerkt, dass um die Messanteile selektiv erfassen und darstellen zu können, jeweils nur das zu vermessende Objektiv mit dem Spektrometer optisch zu verbinden ist.

Werden erfindungsgemäß alle Objektive mit dem Spektrometer zur Verwirklichung des multifokalen Konzepts optisch verbunden, ergibt sich im vorliegenden Fall der Fig. 10B ein kombiniertes Summensignal (durchgezogene Linie 95), indem die signifikanten Intensitäten I bei spezifischen Wellenlängen λ gut auflösbar sind.

Fig. 12A zeigt zwei Messspektren im Wellenlängenbereich von ca. 250 nm bis ca. 500 nm und Fig. 12B verdeutlicht beispielhaft die Konstellation bei einer LIBS-Messung, bei der die Geometrie der Probe 7 alle Objektive bis auf eines (hier das objektiv 25B) abschattet. Die Detektionseinheit 23 des Spektrometersystems ist gemäß des multilateralen Konzepts derart eingestellt, dass die Messdetektionsbereiche der einzelnen Objektive aufeinander fallen und den gemeinsamen Messdetektionsbereich 59 ausbilden. Dabei wird der Messdetektionsbereich 59 mit den verschiedenen Objektiven aus verschiedenen Raumrichtungen erfasst. Mit dem Laserstrahl wird das Plasma 3 auf der Oberfläche der Probe 7 im Bereich des Messdetektionsbereichs 59 erzeugt.

Man erkennt, dass der Messdetektionsbereich 59 nahe der Oberfläche der Probe 7 liegt, jedoch befindet sich Material der Probe 7 zwischen dem Plasma 3 und den Objektiven 25A, 25C. Entsprechend wird Plasmalicht, welches in Richtung der Objektive 25A, 25C emittiert wird, von der Probe 7 abgeschirmt und es kann entsprechend von den Objektiven 25A, 25C nicht erfasst werden.

Dies erkennt man auch an den Messspektren, die zur Verdeutlichung selektiv für die Messanteile der Objektive 25A und 25B in Fig. 12A gezeigt sind. Der Messanteil des Objektivs 25A führt zu kaum Signalbeiträgen. Entsprechend führt der Messanteil zu einem Messspektrum mit sehr geringen Intensitäten I (gestrichelte Linie 97A). Es wird angemerkt, dass sich für das Objektiv 25C ein Messspektrum ähnlich dem des Objektivs 25A ergeben würde. Jedoch führt der Messanteil des Objektivs 25B zu einer spezifischen Signalverteilung mit signifikanten Intensitäten I bei spezifischen Wellenlängen λ im Messspektrum (gepunktete Linie 97B). Diese lassen eine Zuordnung der elementaren Komponenten der Probe 7 trotz der abgeschirmten Objektive 25B, 25C ermitteln. Es wird angemerkt, dass um die Messanteile selektiv erfassen und darstellen zu können, jeweils nur das zu vermessende Objektiv mit dem Spektrometer optisch zu verbinden ist.

Werden erfindungsgemäß alle Objektive mit dem Spektrometer zur Verwirklichung des multilateralen Konzepts optisch verbunden, wird im vorliegenden Fall der Fig. 12B das Summensignal in etwa dem Messanteil des Objektivs 25B entsprechen (gepunktete Linie 97B), da nur das Objektiv 25A einen Messanteil des Plasmas 3 erfassen kann.

Es ist zu ergänzen, dass jeweils Untergruppen von Objektiven einem eigenen optischen Spektrometer zugeordnet werden können, wobei die Spektrometer (und optional die Lichtleitsysteme) beispielsweise an unterschiedliche zu analysierende Spektralbereiche angepasst sind. Beispielsweise können je vier Objektive Messanteile einem optischen Spektrometer im UV-Bereich und je vier Objektive Messanteile einem optischen Spektrometer im NIR-Bereich über jeweils eigene Lichtleitsysteme zuführen. Alternativ oder ergänzend können Messanteile eines Objektivs beispielsweise in zwei Lichtwege aufgeteilt werden, sodass bei vier Objektiven beispielsweise acht Lichtleitfasern eingesetzt werden, von denen vier Lichtleitfasern einen funktionellen Ausgang für ein optisches Spektrometer im UV-Bereich und vier Lichtleitfasern einen funktionellen Ausgang für ein optisches Spektrometer im NIR-Bereich ausbilden.

Die hierin vorgestellten multifokalen und multilateralen Konzepte der Anordnungen von Objektiven in einer Detektionseinheit eines Spektrometersystems zeigen ihre Vorteile insbesondere beim Erfassen von Emissionsspektren eines zu analysierenden bewegten Objekts (Probe) mit einem in Strahlachse modellierten Oberflächenverlauf. Im Vergleich mit einer räumlich kleiner ausgedehnten Fokuszone erhöht sich durch den in Richtung der Strahlachse erweiterten Sichtbereich der Anteil von Oberflächenabschnitten der Probe, bei denen zum einen ein Plasma erzeugt wird und zum anderen Messanteile dieses Plasmas von der Detektionseinheit erfasst werden können. Entsprechend liegt die Menge an erfassten Daten, die für eine Analyse des Materials benötigt wird, schneller vor. Eine schnelle Analyse der Materialzusammensetzung ist in verschiedenen Anwendungen von Vorteil.

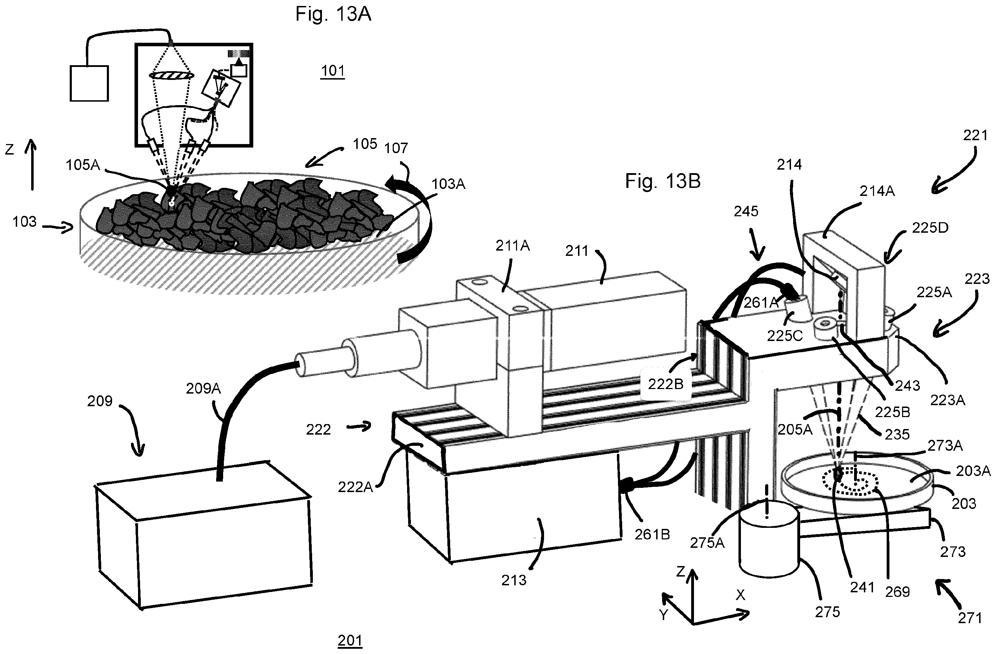

Beispielhaft werden in den Figuren 13A bis 13F Umsetzungen eines stationären Spektrometersystems mit einer fest zugeordneten Anordnung eines Probengefäßes schematisch am Beispiel des multifokalen Konzepts gezeigt, wobei auch das multilaterale Konzept entsprechend eingesetzt werden kann.

Fig. 13A zeigt eine stationäre Anlage mit einem Spektrometersystem 101. Der Laserstrahl 5 des Spektrometersystems 101 ist von oben (in Fig. 13A entlang der Z-Achse) auf ein Probengefäß 103 (z. B. ein Probenteller oder eine Probenschale) gerichtet, in dem eine zu untersuchende Probe 105 zur Untersuchung bereitgestellt wird. Die Detektionseinheit 23 des Spektrometersystems 101 ist bezüglich des Probengefäßes 103 derart angeordnet, dass sich ein Sichtbereich 41 der Detektionseinheit 23 des Spektrometersystems 101 (siehe auch Fig. 2) in einer, beispielsweise fest eingestellten, Höhe (Abstand in Z-Richtung) oberhalb des Bodens (Probengefäßbodenfläche 103A) des Probengefäßes 103 erstreckt und somit eine Detektion von Messanteilen in einem vorbestimmten Z-Bereich ermöglicht.

Beispielhaft besteht die Probe 105 aus gebrochenen Probenstücken 105A. Die Probenstücke 105A bilden einen in Z-Richtung variierenden Oberflächenverlauf aus, der allgemein undefinierten, d. h. nicht festgelegt, ist. Entsprechend umfasst der Oberflächenverlauf viele Messoberflächenbereiche, bei denen die Oberflächen im vorbestimmten Z-Werte-Bereich des Sichtbereichs 41 liegen. Wird auf diesen Oberflächenbereichen ein Plasma erzeugt, liegt das Plasma im Sichtbereich 41 der Detektionseinheit 23, sodass entsprechend Plasmalicht erfasst werden kann.

Der Laserstrahl 5 tastet die Probe 105 entlang einer (einstellbaren) Trajektorie ab, beispielsweise indem das Probengefäß 103 in der X-Y-Ebene rotiert wird (angedeutet durch den Pfeil 107) oder durch ein eindimensionales oder zweidimensionales (beispielsweise lineares, reihenförmiges oder rasterförmiges) Abtasten mittels linearer Verschiebung in der X-Y-Ebene, oder einer Kombination von Schwenkbewegung, Translationsbewegung und/oder Rotationsbewegung, sodass die Trajektorie viele Messabschnitte (Trajektorienabschnitte) umfasst. Den Messabschnitten sind Messoberflächenbereichen zugeordnet, in denen eine Detektion von Plasmalicht stattfinden kann. Die Detektionseinheit 23 erfasst immer dann Plasmalicht, wenn der Laserstrahl 5 auf diesen Messoberflächenbereichen entlang der Messabschnitte ein Plasma erzeugt. Je größer sich der Sichtbereich 41 in Z-Richtung erstreckt, desto größer ist der Anteil der Messoberflächenbereiche an der gesamten Oberfläche und entsprechend größer ist der Anteil der Messabschnitte an der Trajektorie. Somit kann das multifokale Konzept die Datenerfassung für die spektrale Analyse beschleunigen.

Ferner erkennt man, dass bei beispielsweise grobkörnigen Probenstücken 105A auf dem Probengefäß 103 Abschattungseffekte eintreten können. D. h., nicht unter jedem Beobachtungswinkel kann ein Plasma auch detektiert werden. Das hierin offenbarte multilaterale Konzept (nicht explizit in Fig. 13A gezeigt, aber leicht auf diese industrielle Anwendung übertragbar) stellt ebenfalls mehrere Beobachtungsrichtungen bereit, sodass es trotz einer eventuellen Abschattung möglich ist, ein Messanteil mit zumindest einem von mehreren vorgesehenen Objektiven zu erfassen. Somit kann das multilaterale Konzept die Datenerfassung für die spektrale Analyse beschleunigen.

Eine kurze Detektionszeit, die mithilfe der hierin offenbarten multifokalen und/oder multilateralen Konzepte erreicht werden kann, kann es erlauben, die Stücke 105 hinsichtlich der Materialzusammensetzung mit kurzen Messstrecken entlang geeignet gelegener Oberflächenabschnitte zu erkennen und so ein schnelles und/oder hochpräzises Analyseverfahren umzusetzen.

Fig. 13B zeigt ein stationäres Spektrometersystem 201 zur laserinduzierten Plasmaspektralanalyse, dass eine räumlich kompakte Umsetzung der in Fig. 13A schematisch gezeigten Anordnung beispielhaft darstellt. Das Spektrometersystem 201 umfasst eine Laserstrahlquelle 209, die Laserstrahlung (insbesondere einen gepulsten Laserstrahl) abgibt. Die Laserstrahlung wird beispielsweise über eine Lichtleitfaser 209A einer Fokussieroptik 211 zugeführt. Die Fokussieroptik 211 ist zur Fokussierung der Laserstrahlung auf eine Probe ausgebildet, wobei die Probe in einem Probengefäß 203 zur Spektralanalyse im Strahlengang der Laserstrahlung bereitgestellt wird. Die Probe ist in Fig. 13B nicht gezeigt.

Ein Tragrahmen 222 bildet eine Grundstruktur des Spektrometersystems 201, an der optische Komponenten sowie das Probengefäß 203 angeordnet und befestigt sind. Wie in Fig. 13B gezeigt wird, ist die Fokussieroptik 211 über eine Halterung 211A an einer Längsschiene 222A des Tragrahmens 222 befestigt. Beispielsweise ist die Fokussieroptik 211 derart ausgerichtet, dass sie die Laserstrahlung horizontal in X-Richtung abgibt. Vor Ausbildung einer Fokuszone trifft die sich verjüngende Laserstrahlung auf einen Umlenkspiegel 214. Der Umlenkspiegel 214 lenkt die Laserstrahlung im Beispiel der Fig. 13B senkrecht nach unten auf die zu untersuchende Probe um. Die Strahlachse 205A verläuft nach dem Umlenkspiegel 214 in Y-Richtung. Im gezeigten Beispiel erstreckt sich eine Probengefäßbodenfläche 203A des Probengefäßes 203 waagrecht in der XY-Ebene, sodass die Laserstrahlung senkrecht bezüglich der Probengefäßbodenfläche 203A auf die Probe trifft.

Allgemein kann die Probengefäßbodenfläche 203A planar ausgebildet sein, sodass eine Normalenrichtung definiert ist, wobei allgemein einem Probengefäß eine Normalenrichtung zugeordnet werden kann, die bei üblicher Lagerung des Gefäßes senkrecht nach oben (entgegen der Schwerkraft) zeigt. In Fig. 13B verläuft die Normalenrichtung entlang der Z-Richtung. Allgemein kann die Strahlachse 205A nicht nur senkrecht (Einfall der Laserstrahlung von oben) sondern alternativ auch unter einem schrägen Einfallswinkel, beispielsweise einem Winkel im Bereich von 0° bis z. B. 80°, beispielsweise unter 20°, 45° oder 60° zur Normalenrichtung oder Rotationsachse, verlaufen. Ein derartiger schrägseitlicher Einfall der Laserstrahlung kann beispielsweise entgegen der Rotationsrichtung gerichtet sein.

Die Parameter der Laserstrahlung sind auf das Material der Probe dahingehend abgestimmt, dass sich entlang der Strahlachse 205A ein Plasmazündbereich im Bereich der Fokuszone der Laserstrahlung ausbildet. Der Plasmazündbereich weist einen Abstand zur Probengefäßbodenfläche 203A auf, und liegt entsprechend oberhalb der Probengefäßbodenfläche 203A; d. h., er liegt in Strahlausbreitungsrichtung vor der Probengefäßbodenfläche 203A. Das Spektrometersystem 201 ist insbesondere zur spektralen Analyse von Proben mit einer in Z-Richtung unregelmäßig verlaufenden Oberfläche ausgebildet. Die Oberfläche erstreckt sich entsprechend in der X-Y-Ebene oberhalb der Probengefäßbodenfläche 203A, wobei Bereiche der Oberfläche in ihrem Abstand zur Probengefäßbodenfläche 203A variieren. Liegt ein Bereich der Oberfläche im Plasmazündbereich und trifft die Laserstrahlung auf diesen Bereich der Oberfläche, führt dies zu einem laserinduzierten Plasma, das sich oberhalb der Oberfläche ausbildet.

Das Plasma wird mithilfe einer Detektoreinheit 221 und einem optischen Spektrometer 213 spektral analysiert. Die Detektionseinheit 221 ist zum Erfassen von Plasmalicht, das vom laserinduzierten Plasma emittiert wird, ausgebildet. Die Detektionseinheit 221 umfasst hierfür mehrere (im gezeigten Beispiel der Fig. 13B: vier) Objektive 225A, 225B, 225C, 225D, die in einer Objektivhalterung 223 gehalten werden. Jedem der Objektive 225A, 225B, 225C, 225D ist ein Detektionskegel 235 zugeordnet, der in einem Überlappungsbereich mit der Laserstrahlung einen Plasmadetektionsbereich ausbildet. Wird ein Plasma im Plasmadetektionsbereichs eines Objektivs laserinduziert, kann entsprechend ein Messanteil des Plasmalichts vom entsprechenden Objektiv erfasst werden.

Die Plasmadetektionsbereiche bilden zusammen einen Sichtbereich 241 der Detektionseinheit 221 aus. Der Sichtbereich 241 erstreckt sich im Bereich des Plasmazündbereichs und damit in Ausbreitungsrichtung der Laserstrahlung entlang der Strahlachse 205A. Da ein laserinduziertes Plasma sich oberhalb der Oberfläche der Probe ausbildet, überlappt der Plasmazündbereich üblicherweise mit dem Sichtbereich 241, wobei sich der Sichtbereich 241 je nach Größe des laserinduzierten Plasmas optional zumindest teilweise auch vor dem Plasmazündbereich befinden kann.

Im in Fig. 13B gezeigten Beispiel umfasst der Tragrahmen 222 ferner eine sich in Z-Richtung erstreckende Längsträgerplatte 222B. Die Objektivhalterung 223 kann beispielsweise als integraler oder strukturell getrennter Abschnitt der Längsträgerplatte 222B ausgebildet sein. Im Beispiel der Fig. 13B erstreckt sich die Objektivhalterung 223 im Wesentlichen in der X-Y-Ebene und weist eine Halterungsplatte 223A mit mehreren (hier beispielhaft vier) Objektivhalterungsöffnungen zur Aufnahme der Objektive 225A, 225B, 225C, 225D und eine optische Durchgangsöffnung 243 für die Laserstrahlung auf. Die Objektivhalterungsöffnungen und damit die Objektive sind um die optische Durchgangsöffnung 243 herum angeordnet. Beispielsweise sind sie um die optische Durchgangsöffnung 243 azimutal im Abstand von 90° verteilt. Hinsichtlich möglicher Ausgestaltungen der Objektivhalterung 223 wird auf die hierin gegebene Beschreibung, insbesondere auf die Beschreibung der Figuren 2 bis 6B, verwiesen.

Ferner kann das Spektrometersystem 221 ein optisches Lichtleitsystem umfassen, das zum Weiterleiten von mit der Detektionseinheit 221 erfassten Messanteilen des Plasmalichts an das optische Spektrometer 213 ausgebildet ist. Beispielsweise umfasst das Lichtleitsystem mehrere optische Eingängen und einen optischen Ausgang. Hinsichtlich möglicher Ausgestaltungen des Lichtleitsystems wird auf die hierin gegebene Beschreibung, insbesondere auf die Beschreibung der Figuren 7A bis 7E, verwiesen. Beispielsweise kann das Lichtleitsystem mehrere Lichtleitfasern (in Fig. 13B sind beispielhaft zwei Lichtleitfasern 245 gezeigt) umfassen. Die Lichtleitfasern umfassen mehrere optische Eingänge zur Aufnahme von Licht, insbesondere von Messanteilen von Plasmalicht, aus den Objektiven. Ferner kann das optische Lichtleitsystem einen einzigen optischen Ausgang zur Abgabe des Lichts, insbesondere der erfassten Messanteile, in das optische Spektrometer 213 ausbilden. Beispielhaft werden in Fig. 13B erste Enden der Lichtleitfasern 245 jeweils in einem Stecker 261A gehalten und mit dem entsprechenden objektiv optisch verbunden. Zweite Enden der Lichtleitfasern 245 sind in einem Stecker 261B gemeinsam gehalten und zur Einkopplung der Messanteile in das optische Spektrometer 213 mit diesem optisch verbunden. Beispielhaft ist in Fig. 13B das optische Spektrometer 213 räumlich nahe an der Detektionseinheit 221 an der Längsschiene 222A befestigt.

Im Ausführungsbespiel der Fig. 13B wird der Umlenkspiegel 214 oberhalb der Durchgangsöffnung 243 mithilfe eines an der Halterungsplatte 223A vorgesehenen Haltebügels 214A in einem Winkel von 45° zur X-Y-Ebene positioniert. Alternativ kann der Laserstrahl unter einem Winkel zur Normalenrichtung (in Fig. 13B entlang der Z-Achse) auf das Probegefäß gerichtet werden, indem beispielsweise der Umlenkspiegel 214 abweichend von 45° positioniert ist, wobei die Anordnung der Objektive entsprechend nachzuführen ist.

An der Längsträgerplatte 222B kann ferner wie in Fig. 13B gezeigt eine Probengefäßlagerung 271 vorgesehen werden.

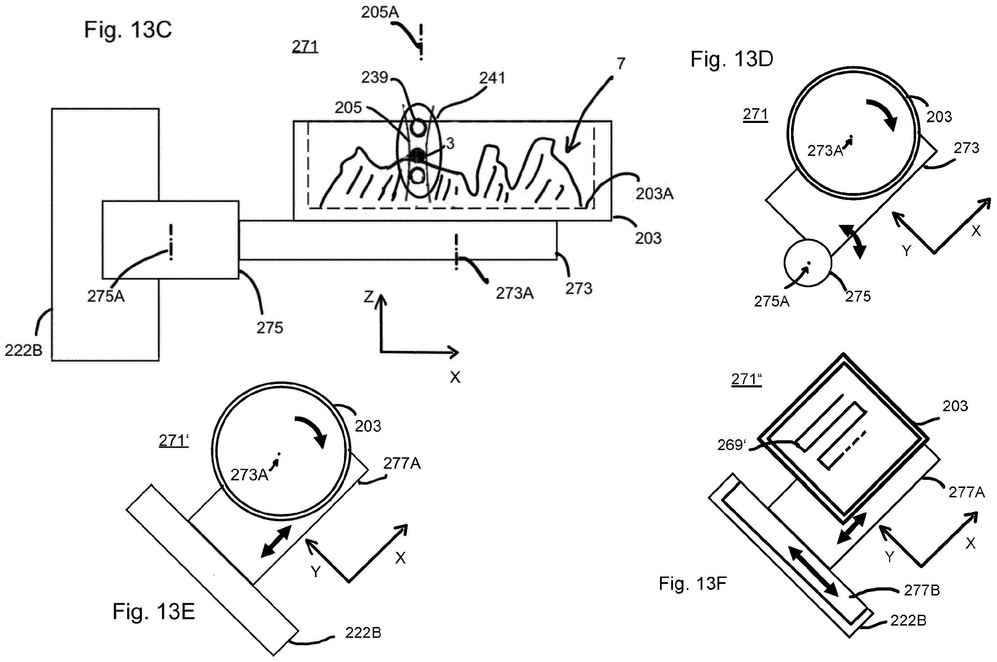

Fig. 13C zeigt vergrößert eine schematische Seitenansicht der Probengefäßlagerung 271 und Fig 13D zeigt eine schematische Aufsicht auf die Probengefäßlagerung 271. Die Probengefäßlagerung 271 ist dazu ausgebildet, das Probengefäß 203 derart in der X-Y-Ebene zu bewegen, dass für einen Messvorgang eine Mehrzahl von Abschnitten der Oberfläche der Probe im Plasmazündbereich positionierbar ist. Die Probengefäßlagerung 271 ist insbesondere dazu ausgebildet, eine Relativbewegung zischen dem Probengefäß 203 und der Strahlachse 205A derart zu bewirken, dass der Sichtbereich 241 die Probengefäßbodenfläche 203A in einem Abstand entlang einer, insbesondere kreisförmigen, spiralförmigen, parallele Linienumfassenden oder rasterförmigen, Abtasttrajektorie abtastet. (Beispielhaft ist in Fig. 13B eine spiralförmige Abtasttrajektorie 269 angedeutet.) Ein Ziel der Relativbewegung ist es, dass die Oberfläche der Probe während des Messvorgangs so abgetastet wird, dass zumindest abschnittsweise - d. h., immer dann, wenn die Oberfläche im Plasmazündbereich liegt - ein laserinduziertes Plasma ausgelöst wird, von dem dann Messanteile des emittierten Plasmalichts spektral analysiert werden können.

Beispielsweise umfasst die in den Figuren 13C und 13D gezeigte Probengefäßlagerung 271 einen Rotationsantrieb 273, der dazu ausgebildet ist, eine Rotationsbewegung des Probengefäßes 203 um eine Rotationsachse 273A anzutreiben. Beispielsweise erstreckt sich das Probengefäß 203, insbesondere die Probengefäßbodenfläche 203A, zweidimensional in der X-Y-Ebene. Im Beispiel verläuft die Rotationsachse 273A senkrecht zur X-Y-Ebene (d. h. in Z-Richtung und parallel zu einer Normalenrichtung der zweidimensionalen Ausdehnung des Probengefäßes. In Fig. 13B und Fig. 13C verläuft die Probengefäßbodenfläche beispielhaft 203A planar in der X-Y-Ebene; alternative Formgebungen der Probengefäßbodenfläche sind z. B. konvex oder konkav. In Fig. 13C steht die Strahlachse 205A senkrecht auf der X-Y-Ebene und verläuft parallel zu einer Normalenrichtung der Probengefäßbodenfläche 203A. In alternativen Ausführungsformen kann die Strahlachse 205A unter einem Winkel zur Z-Achse/Normalenrichtung verlaufen, sodass ein schräger (nicht senkrecht von oben) Einfall der Laserstrahlung auf das Probengefäß 203 vorliegt. Der Rotationsantrieb 273 in Fig. 13C ermöglicht eine kreisförmige Abtasttrajektorie des Plasmazündbereichs oberhalb des Probengefäße 203. Ein Radius der kreisförmigen Abtasttrajektorie entspricht im Fall des Einfalls der Laserstrahlung entlang der Z-Achse dem Abstand zwischen Rotationsachse 273A und Strahlachse 205A. Durch Variation dieses Abstandes kann von der kreisförmigen Abtasttrajektorie abgewichen werden, beispielsweise um eine um eine Kreisbahn oszillierende oder spiralförmige Abtasttrajektorie umzusetzen.

Hierzu kann die Probengefäßlagerung 271 einen Schwenkantrieb 275 umfassen, der dazu ausgebildet ist, die Rotationsachse 273A entlang einer Kreisbahn im Raum, im Beispiel der Fig. 13B in der X-Y-Ebene, zu versetzen. Beispielsweise ist der Rotationsantrieb 273 am Schwenkantrieb 275 zum Schwenken um eine Schwenkachse 275A befestigt. Mithilfe des Rotationsantriebs 273 und des Schwenkantriebs 275 kann die in Fig. 13B gezeigte spiralförmige Abtasttrajektorie 269 bewirkt werden.

In Fig. 13C wird ferner eine Probe 7 mit einem in Z-Richtung unregelmäßigen Oberflächenverlauf schematisch dargestellt. Ferner wird gemäß des hierin offenbarten multifokalen Konzepts ein Sichtbereich 241 angedeutet, der sich in Z-Richtung entlang der Strahlachse 205A eines Laserstrahls 205 erstreckt und mehrere Plasmadetektionsbereiche 239 umfasst. Im gezeigten Beispiel wird ein Plasma 3 im mittleren der Plasmadetektionsbereiche erzeugt, sodass ein Messanteil des vom Plasma 3 ausgehenden Plasmalichts mit dem zum mittleren Plasmadetektionsbereich 239 gehörigen Objektiv erfasst werden kann. Mithilfe einer Rotationsbewegung um die Rotationsachse 273A und einer Schwenkbewegung um die Schwenkachse 275A können unterschiedliche Bereiche der Oberfläche der Probe 7 im Sichtbereich 241 positioniert werden (siehe auch Fig. 13D).

Aufgrund des in Z-Richtung ausgedehnten Sichtbereichs 241 kann ein entsprechend großer Anteil der Oberfläche der Probe 7 zur Plasmaerzeugung und damit zur spektralen Analyse genutzt werden. Entsprechend kann der Messvorgang auch bei einer in Z-Richtung festen Position des Probengefäßes 203 erfolgen. Insbesondere im Rahmen des multifokalen Konzepts kann entsprechend auf eine Verstellbarkeit der Position des Probengefäßes in Z-Richtung sowie auf ein Nachführen des Probengefäßes in Z-Richtung (um Fokus und Oberflächenposition abzugleichen) verzichtet werden. Da entsprechend auf einen Antrieb und eine Ansteuerung der Position des Probengefäßes 203 in Z-Richtung verzichtet werden kann, wird der Aufbau der Probengefäßlagerung und des Spektrometersystems vereinfacht und damit kostengünstiger. Ferner kann eine z. B. optische Überwachung einer Position der Probenoberfläche in Z-Richtung entfallen, wie sie zur Nachführung des Probengefäßes in Z-Richtung eingesetzt werden kann.

Fig. 13E zeigt eine alternative Ausführungsform einer Probengefäßlagerung 271'. Alternativ oder ergänzend zur Rotationsbewegung um die Rotationsachse 273A umfasst die Probengefäßlagerung 271' eine X-Translationseinheit 277A, die ähnlich dem Schwenkantrieb 275 ein Versetzen der Rotationsachse 273A entlang einer Linie ermöglicht, im Beispiel der Fig. 13E in der X-Richtung. Auf diese Weise kann ebenfalls der Abstand zwischen Rotationsachse 273A und Strahlachse 205A eingestellt werden. Die X-Translationseinheit 277A kann an der Längsträgerplatte 222B befestigt werden.

Fig. 13F zeigt eine weitere alternative Ausführungsform einer Probengefäßlagerung 271", die eine X-Translationseinheit 277A und eine Y-Translationseinheit 277B umfasst. Die Y-Translationseinheit 277B kann z. B. in der Längsträger Platte 222B befestigt/integriert werden. Die X-Translationseinheit 277A kann an der Y-Translationseinheit 277B befestigt werden. Die Translationseinheiten 277A, 277B erlauben beispielsweise eine Abtastung versetzter Linien (Abtasttrajektorie 269') oder eine rasterförmige Abtastung der Probenoberfläche durch entsprechendes Verfahren des Probengefäßes (hier ein rechteckig geformter Probenteller) in X- und Y-Richtung. Auch eine Kombination beider Translationseinheiten 277A, 277B mit einer Rotationsbewegung um die Rotationsachse 273A ist möglich.

Allgemein wird der Fachmann anerkennen, dass eine Ausrichtung des Laserstrahls bezüglich einer Oberfläche einer Probe (z. B. bezüglich einer Normalenrichtung der Oberfläche am Ort des erzeugten Plasmas) oder bezüglich einer Auflagefläche, beispielsweise einer Normalenrichtung einer Bodenfläche eines Probengefäßes oder eines Förderbands in einem Winkelbereich von 0° (Einfall parallel zur Normalenrichtung) bis 90° (seitlicher Einfall) wählbar ist, wobei bezüglich etwaiger Abschattungseffekte ein Winkelbereich von 0° bis 80°, insbesondere von 0° bis 60°, Vorteile aufweisen kann. Ferner wird der Fachmann anerkennen, dass eine Ausrichtung des Laserstrahls bezüglich einer Bewegungsrichtung der Probe (z. B. eine Linearbewegung oder eine Rotationsbewegung der Probe) in einem Winkelbereich von 0° (Einfall entgegen der Bewegungsrichtung) über 90° (seitlicher Einfall) bis 180° (Einfall in Bewegungsrichtung) wählbar ist.

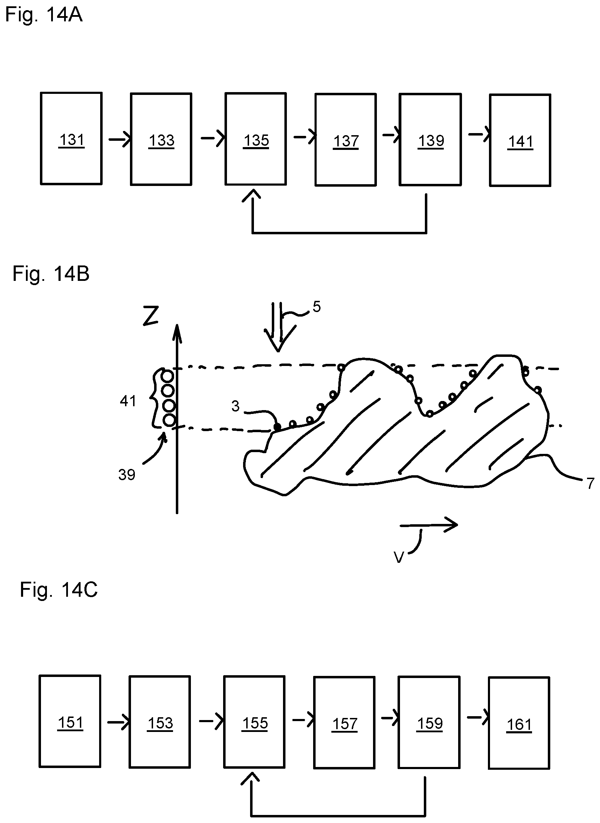

Nachfolgend wird ein Messablauf gemäß dem multifokalen Konzept beispielhaft für zwei Messpunkte bezugnehmend auf die Figuren 14A und 14B zusammengefasst:
Bereitstellen (Schritt 131) einer Detektionseinheit, die mithilfe mehrerer, entsprechend dem multifokalen Konzept ausgerichteter Objektive einen erweiterten Sichtbereich zur Detektion von Plasmalicht bereitstellt.

Positionieren (Schritt 133) eines ersten Oberflächenbereichs einer, beispielsweise auf einem Probengefäß gelagerten, Probe im Sichtbereich der Detektionseinheit .

Einstrahlen (Schritt 135) eines Laserstrahls zu Erzeugung eines ersten Plasmas auf dem ersten Oberflächenbereich, wobei Plasmalicht gemäß einem Material der Probe vom ersten Plasma emittiert wird.

Erfassen (Schritt 137) eines ersten Messanteils des Plasmalichts mithilfe der Detektionseinheit und Weiterleiten des ersten Messanteils des Plasmalichts zu einem optischen Spektrometer.

Bewegen (Schritt 139) der Probe relativ zum Sichtbereich, insbesondere im Rahmen einer kontinuierlichen Relativbewegung zwischen Probe und Detektionseinheit, beispielsweise mithilfe eines Rotationsantriebs und eines Schwenkantriebs des Probengefäßes, sodass ein zweiter Oberflächenbereich der Probe im Sichtbereich positioniert ist.

Wiederholen der Schritte des Einstrahlens (135) und des Erfassens (Schritt 137) für den zweiten Oberflächenbereich, sodass ein zweiter Messanteil des Plasmalicht eines zweiten Plasmas zum optischen Spektrometer weitergeleitet wird.

Basierend auf dem ersten Messanteil und dem zweiten Messanteil, Ausgeben (Schritt 141) eines kumulierten optischen Spektrums an einer Recheneinheit und Durchführen einer spektralen Analyse des kumulierten optischen Spektrums zu Bestimmung und Ausgabe der elementaren Zusammensetzung der Probe. Im Rahmen eines Messvorgangs können solange Spektren von verschiedenen Messkonstellation für eine Probe gesammelt werden, und insbesondere unter Nutzung von einem Filteralgorithmus ausgewertet werden, bis eine erforderliche Qualität hinsichtlich der ausgegebenen Analyse erreicht ist.

Fig. 14B zeigt eine Probe 7, die mit einer (relativen) Geschwindigkeit v an einem gepulsten Laserstrahl 5 eines Spektrometersystems 1 vorbei bewegt wird. Die Probe 7 weist ein strukturiertes Oberflächenprofil auf, das sich nur teilweise im Sichtbereich 41 des Spektrometersystems 1 (gegeben durch die Plasmadetektionsbereiche 39) erstreckt. Aufgrund des gepulsten Laserstrahls 5 wurde eine Sequenz von Plasmen auf der Oberfläche der Probe 7 erzeugt und das Plasmalicht entsprechend detektiert und spektral analysiert. Beispielhaft sind ein letztes Plasma 3 sowie die Positionen der vorausgehend erzeugten Plasmen (Kreise) entlang der Oberfläche der Probe 7 angedeutet.

Nachfolgend wird ein Messablauf gemäß dem multilateralen Konzept beispielhaft für zwei Messpunkte bezugnehmend auf Fig. 14C zusammengefasst:
Bereitstellen (Schritt 151) einer Detektionseinheit, die mithilfe mehrerer, entsprechend dem multilateralen Konzept ausgerichteter Objektive einen erweiterten Raumwinkelbereich zur Detektion von Plasmalicht bereitstellt.

Positionieren (Schritt 153) eines ersten Oberflächenbereichs einer, beispielsweise auf einem Probengefäß gelagerten, Probe im Sichtbereich der Detektionseinheit.

Einstrahlen (Schritt 155) eines Laserstrahls zu Erzeugung eines ersten Plasmas auf dem ersten Oberflächenbereich, wobei Plasmalicht gemäß einem Material der Probe vom ersten Plasma emittiert wird.

Erfassen (Schritt 157) eines ersten Messanteils des Plasmalichts mithilfe einer ersten Untergruppe von Objektiven der Detektionseinheit und Weiterleiten des ersten Messanteils des Plasmalichts zu einem optischen Spektrometer.

Bewegen (Schritt 159) der Probe relativ zum Sichtbereich, insbesondere im Rahmen einer kontinuierlichen Relativbewegung zwischen Probe und Detektionseinheit, beispielsweise mithilfe eines Rotationsantriebs und Schwenkantriebs des Probengefäßes, sodass ein zweiter Oberflächenbereich der Probe im Sichtbereich positioniert ist.

Wiederholen der Schritte des Einstrahlens (155) und des Erfassens (Schritt 157) für den zweiten Oberflächenbereich, wobei aufgrund der Geometrie der Probe ein zweiter Messanteil eines Plasmalichts eines zweiten Plasmas mithilfe einer zweiten Untergruppe von Objektiven der Detektionseinheit, die sich von der ersten Untergruppe von Objektiven der Detektionseinheit unterscheidet, erfasst wird, sodass der zweite Messanteil zum optischen Spektrometer weitergeleitet wird.

Basierend auf dem ersten Messanteil und dem zweiten Messanteil, Ausgeben (Schritt 161) eines kumulierten optischen Spektrums an einer Recheneinheit und Durchführen einer spektralen Analyse des kumulierten optischen Spektrums zu Bestimmung und Ausgabe der elementaren Zusammensetzung der Probe. Im Rahmen eines Messvorgangs können solange Spektren von verschiedenen Messkonstellation für eine Probe gesammelt werden, und insbesondere unter Nutzung von einem Filteralgorithmus ausgewertet werden, bis eine erforderliche Qualität hinsichtlich der ausgegebenen Analyse erreicht ist.

Die beiden oben beispielhaft beschriebenen Messabläufe sind nicht auf die Detektion von zwei Plasmen und entsprechend zwei Messanteile begrenzt, sondern erfolgen beispielsweise kontinuierlich für eine Vielzahl von erzeugten Plasmen/Messanteilen, solange sich die Oberfläche der Probe im Sichtbereich erstreckt, und wird, sollte sich die Oberfläche aus dem Sichtbereich heraus bewegen, fortgesetzt, sobald die Oberfläche wieder in den Sichtbereich eintritt.

Nachfolgend werden einige Aspekte eines Lichtleitsystems zusammengefasst, wie es z. B. bei einer Umsetzung des multifokalen Konzepts oder des multilateralen Konzepts in einer Detektionseinheit eines stationären Spektrometersystems verwendet werden kann.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Spektrometersystem (201) zur laserinduzierten Plasmaspektralanalyse mit:
einer Laserstrahlquelle (209) zur Abgabe eines, insbesondere gepulsten, Laserstrahls (205),
einer Fokussieroptik (211) zur Fokussierung des Laserstrahls (205) auf eine Probe (7), wodurch in Abhängigkeit von Laserparametern des Laserstrahls (205) und einem Material der Probe (7) ein Plasmazündbereich entlang einer Strahlachse (205A) des Laserstrahls (205) derart ausgebildet wird, dass eine im Plasmazündbereich angeordnete Oberfläche der Probe (7) zur Ausbildung eines laserinduzierten Plasmas (3) führt,
einer Detektionseinheit (221) zum Erfassen von Plasmalicht, das vom laserinduzierten Plasma (3) emittiert wird, umfassend:
- eine Objektivhalterung (223) und
- mehrere von der Objektivhalterung (223) gehaltene Objektive (225A, 225B, 225C, 225D), wobei jedem der Objektive (225A, 225B, 225C, 225D) ein Detektionskegel (235) zugeordnet ist, der in einem Überlappungsbereich mit dem Laserstrahl (205) einen Plasmadetektionsbereich (239) ausbildet, sodass bei der Ausbildung des laserinduzierten Plasmas (3) in einem der Plasmadetektionsbereiche (239) ein Messanteil des Plasmalichts vom entsprechenden der Objektive (225A, 225B, 225C, 225D) erfassbar ist und die Plasmadetektionsbereiche (239) zusammen einen Sichtbereich (241) der Detektionseinheit (221) ausbilden, wobei die Objektive (225A, 225B, 225C, 225D) derart in der Objektivhalterung (223) angeordnet und ausgerichtet sind, dass die Plasmadetektionsbereiche (239) entlang der Strahlachse (205A) versetzt angeordnet sind und zusammen den Sichtbereich (241) der Detektionseinheit (221) ausbilden,
einem Probengefäß (203) mit einer Probengefäßbodenfläche (203A), auf der die Probe (7) positionierbar ist,
einer Probengefäßlagerung (271, 271'), die dazu ausgebildet ist, das Probengefäß (203) derart zu verfahren, dass eine Mehrzahl von Abschnitten der Oberfläche der Probe (7) im Plasmazündbereich positionierbar ist, und
einem optischen Spektrometer (213) zur Spektralanalyse der von der Detektionseinheit (221) erfassten Messanteile des Plasmalichts.

2. Spektrometersystem (201) nach Anspruch 1, wobei die Probengefäßlagerung (271, 271') dazu ausgebildet ist, eine Relativbewegung zwischen Probengefäß (203) und Strahlachse (205A) zu bewirken, bei der der Sichtbereich (241) beabstandet über die Probengefäßbodenfläche (203A) entlang einer, insbesondere kreisförmigen, spiralförmigen, linienförmigen oder rasterförmigen, Abtasttrajektorie (269) verfahren wird, und
wobei die Probengefäßlagerung (271, 271') optional einen Rotationsantrieb (273), einen Schwenkantrieb (275) und/oder einen Linearantrieb (277A, 277B) umfasst, um die Relativbewegung zu bewirken.

3. Spektrometersystem (201) nach Anspruch 1, wobei die Probengefäßlagerung (271, 271') einen Rotationsantrieb (273) umfasst, der dazu ausgebildet ist, eine Rotationsbewegung des Probengefäßes (203) um eine Rotationsachse (273A) anzutreiben, wobei die Rotationsachse (273A) insbesondere unter einem Winkel im Bereich von 0° bis 80° zur Strahlachse (205A) verläuft.

4. Spektrometersystem (201) nach Anspruch 3, wobei die Probengefäßlagerung (271, 271') ferner umfasst
- einen Schwenkantrieb (275), der dazu ausgebildet ist, die Rotationsachse (273A) entlang einer Kreisbahn im Raum zu bewegen, und/oder
- einen Linearantrieb (277A, 277B), der dazu ausgebildet ist, die Rotationsachse (273A) entlang einer Achse (X, Y) im Raum zu bewegen.

5. Spektrometersystem (201) nach einem der vorhergehenden Ansprüche, wobei die Probengefäßlagerung (271, 271') zwei Linearantriebe (277A, 277B) umfasst, die dazu ausgebildet sind, das Probengefäß (203) in einer Ebene im Raum zu verfahren, und/oder
wobei das Probengefäß (203) eine zweidimensionale Ausdehnung aufweist und die Strahlachse (205A) unter einem Winkel im Bereich von 0° bis 80° zu einer Normalenrichtung der zweidimensionalen Ausdehnung des Probengefäßes (203) verläuft.

6. Spektrometersystem (201) nach einem der vorhergehenden Ansprüche, ferner mit einem Umlenkspiegel (214), wobei der Umlenkspiegel (214) dazu ausgebildet ist, den Laserstrahl (205) zwischen Fokussieroptik (11) und Probengefäß (203), insbesondere um 90°, umzulenken, und
wobei die Detektionseinheit (221) zwischen dem Umlenkspiegel (214) und dem Probengefäß (203) angeordnet ist.

7. Spektrometersystem (201) nach einem der Ansprüche 1 bis 6, wobei die Plasmadetektionsbereiche (239)
- sich entlang der Strahlachse (205A) teilweise überlappen, ineinander übergehen oder voneinander beabstandet sind und/oder
- sich entlang der Strahlachse (205A) jeweils über 0,1 mm bis 15 mm und/oder über 1/10 bis 1/4 des Sichtbereichs (241) erstrecken.

8. Spektrometersystem (201) nach einem der Ansprüche 1 bis 6, wobei die Objektive derart in der Objektivhalterung (223) angeordnet und ausgerichtet sind, dass die Detektionskegel (235) in einem Überlappungsbereich mit dem Laserstrahl (205) einen gemeinsamen Plasmadetektionsbereich ausbilden, aus dem im Fall eines im Plasmadetektionsbereich vorliegenden Plasmas (203) von jedem der Objektive ein Messanteil des Plasmalichts erfassbar ist, und/oder wobei jeder der Detektionskegel (235) sich entlang einer Beobachtungsachse erstreckt, die unter einem Beobachtungswinkel (α) im Bereich von 0° bis 90° zur Strahlachse (205A) verläuft, und die Beobachtungsachsen der Objektive insbesondere auf einer Kegeloberfläche um die Strahlachse (205A) liegen.

9. Spektrometersystem (201) nach einem der Ansprüche 1 bis 8, wobei die Objektive (225A, 225B, 225C, 225D) azimutal beabstandet um die Strahlachse (205A) angeordnet sind, und/oder
wobei die Objektive (225A, 225B, 225C, 225D) derart in der Objektivhalterung (223) angeordnet und ausgerichtet sind, dass die Detektionskegel (235) in unterschiedliche Raumwinkel emittierte Messanteile des Plasmalichts eines Plasmas (3) erfassen.

10. Spektrometersystem (201) nach einem der Ansprüche 1 bis 9, wobei die Objektivhalterung (223) eine Halterungsplatte (223A) aufweist, in der mehrere Objektivhalterungsöffnungen zur Aufnahme der Objektive (225A, 225B, 225C, 225D) und eine optische Durchgangsöffnung (243) für den Laserstrahl (205) vorgesehen sind, und wobei die Objektivhalterungsöffnungen um die optische Durchgangsöffnung (243) herum angeordnet sind, und/oder
wobei die Objektive (225A, 225B, 225C, 225D) azimutal beabstandet um die Strahlachse (205A), insbesondere azimutal gleichverteilt um die Strahlachse (205A), angeordnet sind, und/oder
wobei die Detektionseinheit (221) zwei bis 25, insbesondere vier, Objektive (225A, 225B, 225C, 225D) umfasst.

11. Spektrometersystem (201) nach einem der Ansprüche 1 bis 10, ferner mit einem Tragrahmen (222), an dem die Fokussieroptik (211), die Probengefäßlagerung (271, 271') und optional das optische Spektrometer (213) befestigt sind und wobei die Objektivhalterung (223) eine am Tragrahmen (222) befestigte oder als Teil des Tragrahmens (222) ausgebildete Halterungsplatte (223A) aufweist, an der die Objektive befestigt sind und in der eine optische Durchgangsöffnung (243) für den Laserstrahl (205) vorgesehen ist, wobei die Strahlachse (205A) sich insbesondere orthogonal zur Halterungsplatte (223A) erstreckt.

12. Spektrometersystem (201) nach einem der Ansprüche 1 bis 11, ferner mit einem optischen Lichtleitsystem (27), das zum Weiterleiten von mit der Detektionseinheit (221) erfassten Messanteilen des Plasmalichts an das optische Spektrometer (213) ausgebildet ist und mehrere optische Eingängen (29) und einen optischen Ausgang (31) umfasst,
wobei jeder der optischen Eingänge (29) optisch einem der Objektive (225A, 225B, 225C, 225D) zugeordnet und zur Aufnahme des mit dem zugeordneten Objektiv (225A, 225B, 225C, 225D) erfassten Messanteils ausgebildet ist, und
der optischen Ausgang (31) zur Einkopplung von mit den Objektiven (225A, 225B, 225C, 225D) erfassten Messanteilen in das optische Spektrometer (213) ausgebildet ist.

13. Spektrometersystem (201) nach Anspruch 12, wobei mindestens eines der Objektive (225A, 225B, 225C, 225D) derart ausgebildet und in der Objektivhalterung (223) angeordnet ist, dass ein Messanteil des Plasmalichts, der im Detektionskegel des Objektivs (225A, 225B, 225C, 225D) erfasst wird, auf den dem Objektiv (225A, 225B, 225C, 225D) zugeordneten optischen Eingang (29) abgebildet wird.

14. Spektrometersystem (201) nach Anspruch 12 oder Anspruch 13, wobei jedem der aus dem optischen Lichtleitsystem (27) austretenden Messanteile eine Strahlachse (75A, 75B, 75C, 75D) zugeordnet ist, und die Strahlachsen (75A, 75B, 75C, 75D) parallel zueinander sind oder nicht mehr als unter einem Winkel von bis zu 1° oder bis zu 3° zueinander verlaufen.

15. Spektrometersystem (201) nach einem der Ansprüche 1 bis 14, wobei das optische Spektrometer (213) eine Eintrittsapertur (19), insbesondere einen Eintrittsspalt (19A), ein dispersives optisches Element (13A), insbesondere ein Gitter, Prisma oder Gitterprisma, und einen Detektor (13B) umfasst, und
wobei die Messanteile durch die Eintrittsapertur (19) in das optische Spektrometer (213) eingekoppelt werden und über das dispersive optische Element (13A) spektral aufgelöst zu dem Detektor (13B) geführt werden, um eine den Objektiven (225A, 225B, 225C, 225D) der Detektionseinheit (221) zugeordnete spektrale Verteilung (17) auszugeben.

## Claims

1. A spectrometer system (201) for laser-induced plasma spectral analysis comprising:
a laser beam source (209) for emitting an, in particular pulsed, laser beam (205);
a focusing optics (211) for focusing the laser beam (205) onto a sample (7), wherein a plasma excitation area is formed along a beam axis (205A) of the laser beam (205) in dependence of laser parameters of the laser beam (205) and a material of the sample (7) in such a manner that a surface of the sample (7) located in the plasma excitation area leads to the formation of a laser-induced plasma (3);
a detection unit (221) for detecting plasma light, which is emitted from the laser-induced plasma (3), comprising
- an objective mount (223); and
- a plurality of objectives (225A, 225B, 225C, 225D) mounted by the objective mount (223), wherein with each of the objectives (225A, 225B, 225C, 225D) there is associated a detection cone (235), which forms a plasma detection region (239) in an overlap region with the laser beam (205), so that when the laser-induced plasma (3) is formed in one of the plasma detection regions (239), a measurement portion of the plasma light can be detected by the corresponding one of the objectives (225A, 225B, 225C, 225D) and the plasma detection regions (239) jointly form a viewing region (241) of the detection unit (221), wherein the objectives (225A, 225B, 225C, 225D) are arranged and aligned in the objective mount (223) such that the plasma detection regions (239) are arranged offset along the beam axis (205A) and jointly form the viewing region (241) of the detection unit (221);
a sample vessel (203) with a sample vessel bottom surface (203A) on which the sample (7) can be positioned;
a sample vessel support (271, 271') adapted to move the sample vessel (203) so that a plurality of sections of the surface of the sample (7) can be positioned in the plasma excitation area; and
an optical spectrometer (213) for spectral analysis of the measured components of the plasma light detected by the detection unit (221).

2. The spectrometer system (201) according to claim 1, wherein the sample vessel support (271, 271') is configured to affect a relative movement between the sample vessel (203) and the beam axis (205A), during which relative movement the viewing region (241) is moved at a distance over the sample vessel bottom surface (203A) along a scanning trajectory (269), in particular, a circular, spiral, linear or grid-shaped trajectory; and
wherein the sample vessel support (271, 271') optionally comprises a rotation drive (273), a swivel drive (275), and/or a linear drive (277A, 277B) to perform the relative movement.

3. The spectrometer system (201) according to claim 1, wherein the sample vessel support (271, 271') comprises a rotation drive (273), which is configured to drive a rotational movement of the sample vessel (203) about an axis of rotation (273A), wherein the axis of rotation (273A) extends, in particular, at an angle in the range from 0° to 80° with respect to the beam axis (205A).

4. The spectrometer system (201) according to claim 3, wherein the sample vessel support (271, 271') further comprises
- a swivel drive (275), which is configured to move the axis of rotation (273A) along a circular path in space; and/or
- a linear drive (277A, 277B), which is configured to move the axis of rotation (273A) along an axis (X, Y) in space.

5. The spectrometer system (201) according to any one of the preceding claims, wherein the sample vessel support (271, 271') comprises two linear drives (277A, 277B), which are configured to move the sample vessel (203) in a plane in space; and/or
wherein the sample vessel (203) has a two-dimensional extension and the beam axis (205A) extends at an angle in the range from 0° to 80° to a normal direction of the two-dimensional extension of the sample vessel (203).

6. The spectrometer system (201) according to any one of the preceding claims, further comprising a deflecting mirror (214), wherein the deflecting mirror (214) is configured to deflect the laser beam (205) between the focusing optics (11) and the sample vessel (203), in particular, by 90°; and
wherein the detection unit (221) is arranged between the deflecting mirror (214) and the sample vessel (203).

7. The spectrometer system (201) according to any one of claims 1 to 6,
wherein the plasma detection regions (239)
- partially overlap along the beam axis (205A), merge into one another, or are spaced apart from one another; and/or
- extend along the beam axis (205A) over 0.1 mm to 15 mm and/or over 1/10 to 1/4 of the viewing region (241).

8. The spectrometer system (201) according to any one of claims 1 to 6, wherein the objectives are arranged and aligned in the objective mount (223) such that the detection cones (235) form a common plasma detection region in an overlap region with the laser beam (205), from which common plasma detection region a measurement portion of the plasma light can be detected by each of the objectives in the case of a plasma (203) being in the plasma detection region; and/or
wherein each of the detection cones (235) extends along an observation axis, which extends at an observation angle (α) in the range from 0° to 90° with respect to the beam axis (205A), and the observation axes of the objectives lie, in particular, on a cone surface around the beam axis (205A).

9. The spectrometer system (201) according to any one of claims 1 to 8, wherein the objectives (225A, 225B, 225C, 225D) are arranged azimuthally spaced around the beam axis (205A); and/or
wherein the objectives (225A, 225B, 225C, 225D) are arranged and aligned in the objective mount (223) in such a manner that the detection cones (235) detect measurement portions of the plasma light of a plasma (3) emitted at different solid angles.

10. The spectrometer system (201) according to any one of claims 1 to 9, wherein the objective mount (223) comprises a mount plate (223A) in which a plurality of objective mount openings for receiving the objectives (225A, 225B, 225C, 225D) and an optical passage opening (243) for the laser beam (205) are provided, and wherein the objective mount openings are arranged around the optical passage opening (243); and/or
wherein the objectives (225A, 225B, 225C, 225D) are arranged azimuthally spaced around the beam axis (205A), in particular, azimuthally equally distributed around the beam axis (205A); and/or
wherein the detection unit (221) comprises two to 25, in particular four, objectives (225A, 225B, 225C, 225D).

11. The spectrometer system (201) according to any one of claims 1 to 10, further comprising a support frame (222), at which the focusing optics (211), the sample vessel support (271, 271'), and optionally the optical spectrometer (213) are mounted, and wherein the objective mount (223) comprises a mount plate (223A) mounted at the support frame (222) or formed as part of the support frame (222), at which the objectives are mounted and in which an optical passage opening (243) for the laser beam (205) is provided, the beam axis (205A) extending in particular orthogonally to the mounting plate (223A).

12. The spectrometer system (201) according to any one of claims 1 to 11, further comprising an optical light guiding system (27) configured for forwarding measurement portions of the plasma light detected by the detection unit (221) to the optical spectrometer (213) and comprising a plurality of optical inputs (29) and an optical output (31),
wherein each of the optical inputs (29) is optically associated with one of the objectives (225A, 225B, 225C, 225D) and is adapted to receive the measurement portion detected by the associated objective (225A, 225B, 225C, 225D); and
the optical output (31) is configured for coupling measurement portions detected by the objectives (225A, 225B, 225C, 225D) into the optical spectrometer (213).

13. The spectrometer system (201) according to claim 12, wherein at least one of the objectives (225A, 225B, 225C, 225D) is configured and arranged in the objective mount (223) such that a measurement portion of the plasma light, which is detected in the detection cone of the objective (225A, 225B, 225C, 225D), is imaged onto the optical input (29) associated with the objective (225A, 225B, 225C, 225D).

14. The spectrometer system (201) according to claim 12 or claim 13, wherein a beam axis (75A, 75B, 75C, 75D) is assigned to each of the measurement portions emerging from the optical light guiding system (27), and the beam axes (75A, 75B, 75C, 75D) extend parallel to each other or do not extend under an angle of up to 1° or up to 3° with respect to each other.

15. The spectrometer system (201) according to any one of claims 1 to 14, wherein the optical spectrometer (213) comprises an input aperture (19), in particular an input slit (19A), a dispersive optical element (13A), in particular a grating, prism or grating prism, and a detector (13B); and
wherein the measurement portions are coupled through the input aperture (19) into the optical spectrometer (213) and are guided via the dispersive optical element (13A) spectrally resolved to the detector (13B) in order to output a spectral distribution (17) associated with the objectives (225A, 225B, 225C, 225D) of the detection unit (221).

## Revendications

1. Système de spectromètre (201) pour l'analyse spectrale de plasma induit par laser, comprenant :
une source de faisceau laser (209) pour émettre un faisceau laser, notamment pulsé (205),
une optique de focalisation (211) pour focaliser le faisceau laser (205) sur un échantillon (7), moyennant quoi en fonction des paramètres laser du faisceau laser (205) et d'un matériau de l'échantillon (7), une zone d'amorçage du plasma se forme le long d'un axe de faisceau (205A) du faisceau laser (205), de sorte qu'une surface de l'échantillon (7) disposée dans la zone d'amorçage du plasma induise la formation d'un plasma induit par laser (3),
une unité de détection (221) pour la détection de la lumière plasma, qui est émise par le plasma induit par laser (3), comprenant :
- un porte-lentille (223) et
- une pluralité de lentilles (225A, 225B, 225C, 225D) maintenues par le porte-lentille (223), dans lequel chacune des lentilles (225A, 225B, 225C, 225D) est associée à un cône de détection (235), qui forme une zone de détection de plasma (239) dans une région de superposition avec le faisceau laser (205), de sorte que, lors de la formation du plasma induit par laser (3) dans une des zones de détection de plasma (239), une composante de mesure de la lumière plasma provenant de la lentille correspondante (225A, 225B, 225C, 225D) peut être détectée et les zones de détection de plasma (239) forment conjointement une zone d'observation (241) de unité de détection (221), dans lequel les lentilles (225A, 225B, 225C, 225D) sont disposées et configurées dans le porte-lentilles (223) de telle sorte que les zones de détection de plasma (239) soient décalées le long de l'axe de faisceau (205A) et forment conjointement la zone d'observation (241) de unité de détection (221),
un récipient d'échantillon (203) comportant un socle de récipient d'échantillon (203A) sur lequel l'échantillon (7) peut être positionné,
un support de récipient d'échantillon (271, 271'), qui est configuré pour déplacer le récipient (203) de manière à positionner une pluralité de sections de la surface de l'échantillon (7) dans la zone d'amorçage du plasma et
un spectromètre optique (213) pour l'analyse spectrale des composantes de mesure de la lumière plasma détectée par l'unité de détection (221).

2. Système de spectromètre (201) selon la revendication 1, dans lequel le support de récipient d'échantillon (271, 271') est configuré pour effectuer un mouvement relatif entre le support de récipient d'échantillon (203) et l'axe de faisceau (205A), dans lequel la zone d'observation (241) se déplace par intervalles sur la surface de récipient d'échantillon (203A) le long d'une trajectoire de balayage (269), notamment circulaire, spirale, linéaire ou en grille,
et dans lequel le support de récipient d'échantillon (271, 271') comprend optionnellement un entraînement rotatif (273), un entraînement pivotant (275) et/ou un entraînement linéaire (277A, 277B) pour effectuer le mouvement relatif.

3. Système de spectromètre (201) selon la revendication 1, dans lequel le support de récipient d'échantillon (271, 271') comprend un entraînement rotatif (273), qui est configuré pour entraîner un mouvement de rotation du récipient d'échantillon (203) autour d'un axe de rotation (273A), dans lequel l'axe de rotation (273A) s'étend notamment à un angle compris entre 0° et 80° par rapport à l'axe de faisceau (205A).

4. Système de spectromètre (201) selon la revendication 3, dans lequel le support de récipient d'échantillon (271, 271') comprend en outre :
- un entraînement pivotant (275), qui est configuré pour déplacer l'axe de rotation (273A) le long d'une trajectoire circulaire dans l'espace, et/ou
- un entraînement linéaire (277A, 277B), qui est configuré pour déplacer l'axe de rotation (273A) le long d'un axe (X, Y) dans l'espace.

5. Système de spectromètre (201) selon une des revendications précédentes, dans lequel le support de récipient d'échantillon (271, 271') comprend deux entraînements linéaires (277A, 277B), qui sont configurés pour déplacer le support de récipient d'échantillon (203) dans un plan de l'espace et/ou dans lequel le support de récipient d'échantillon (203) présente une étendue bidimensionnelle et l'axe de faisceau (205A) s'étend à un angle compris entre 0° et 80° par rapport à une normale de l'étendue bidimensionnelle du support de récipient d'échantillon (203).

6. Système de spectromètre (201) selon une des revendications précédentes, comprenant en outre un miroir de déviation (214), dans lequel le miroir de déviation (214) est configuré pour dévier le faisceau laser (205) entre l'optique de focalisation (11) et le récipient contenant l'échantillon (203), notamment de 90° et
dans lequel l'unité de détection (221) est disposée entre le miroir de déviation (214) et le récipient d'échantillon (203).

7. Système de spectromètre (201) selon une des revendications 1 à 6, dans lequel les zones de détection du plasma (239)
- se superposent partiellement, fusionnent ou sont espacées le long de l'axe de faisceau (205A) et/ou
- s'étendent le long de l'axe de faisceau (205A) sur une longueur de 0,1 mm à 15 mm et/ou sur une surface de visualisation comprise entre 1/10 et 1/4 de la zone d'observation (241).

8. Système de spectromètre (201) selon une des revendications 1 à 6, dans lequel les lentilles sont disposées et alignées dans le porte-lentilles (223) de sorte que les cônes de détection (235) forment dans une zone de superposition avec le faisceau laser (205) une zone de détection de plasma commune à partir de laquelle, en présence de plasma (203) dans la zone de détection de plasma, une composante de mesure de la lumière plasma peut être détectée par chacune des lentilles et/ou dans lequel chaque cône de détection (235) s'étend le long d'un axe d'observation formant un angle (α) compris entre 0° et 90° par rapport à l'axe de faisceau (205A) et les axes d'observation des lentilles se situent notamment sur une surface conique autour de l'axe de faisceau (205A).

9. Système de spectromètre (201) selon une des revendications 1 à 8, dans lequel les lentilles (225A, 225B, 225C, 225D) sont disposées espacées de manière azimutale autour de l'axe de faisceau (205A), et/ou dans lequel les lentilles (225A, 225B, 225C, 225D) sont disposées et alignées dans le porte-lentilles (223) de telle sorte que les cônes de détection (235) détectent les composantes de mesure de la lumière plasma (3) émise à différents angles solides.

10. Système de spectromètre (201) selon une des revendications 1 à 9, dans lequel le porte-lentilles (223) présente une plaque de montage (223A), dans laquelle une pluralité d'ouvertures destinées à recevoir les lentilles (225A, 225B, 225C, 225D) et une ouverture de passage optique (243) pour le faisceau laser (205) sont prévues et dans lequel les ouvertures de porte-lentilles sont disposées autour de l'ouverture de passage optique (243), et/ou
dans lequel les lentilles (225A, 225B, 225C, 225D) sont disposées espacées de manière azimutale autour de l'axe de faisceau (205A), notamment réparties de manière uniforme autour de l'axe de faisceau (205A) et/ou
dans lequel l'unité de détection (221) comporte de deux à 25 lentilles, notamment quatre (225A, 225B, 225C, 225D).

11. Système de spectromètre (201) selon une des revendications 1 à 10, comprenant en outre un bâti de support (222) auquel sont fixés l'optique de focalisation (211), le support de récipient d'échantillon (271, 271') et, optionnellement, le spectromètre optique (213) et dans lequel le porte-lentille (223) comporte une plaque de montage (223A) fixée au bâti de support (222) ou faisant partie intégrante du bâti de support (222), sur laquelle sont fixées les lentilles et dans laquelle est prévue une ouverture de passage optique (243) pour le faisceau laser (205), dans lequel l'axe de faisceau (205A) s'étend notamment orthogonalement à la plaque de montage (223A).

12. Système de spectromètre (201) selon une des revendications 1 à 11, comportant en outre un système de guide de lumière optique (27), qui est configuré pour acheminer les composantes de mesure de la lumière plasma détectées par l'unité de détection (221) vers le spectromètre optique (213) et comprend une pluralité d'entrées optiques (29) et une sortie optique (31),
dans lequel chacune des entrées optiques (29) est optiquement associée à une des lentilles (225A, 225B, 225C, 225D) et configurée pour recevoir la composante de mesure détectée par la lentille associée (225A, 225B, 225C, 225D),
la sortie optique (31) est configurée pour coupler les composantes de mesure détectées par les lentilles (225A, 225B, 225C, 225D) vers le spectromètre optique (213).

13. Système de spectromètre (201) selon la revendication 12, dans lequel au moins une des lentilles (225A, 225B, 225C, 225D) est configurée et disposée dans le porte-lentille (223) de telle sorte qu'une composante de mesure de la lumière plasma, qui est détectée dans le cône de détection de la lentille (225A, 225B, 225C, 225D) soit projetée sur l'entrée optique (29) associée à la lentille (225A, 225B, 225C, 225D).

14. Système de spectromètre (201) selon la revendication 12 ou 13, dans lequel chaque composante de mesure sortant du système de guidage optique (27) est associée à un axe de faisceau (75A, 75B, 75C, 75D) et les axes de faisceau (75a, 75B, 75C, 75D) sont parallèles les uns aux autres ou ne s'étendent pas à un angle supérieur à 1° ou 3° les uns par rapport aux autres.

15. Système de spectromètre (201) selon une des revendications 1 à 14, dans lequel le spectromètre optique (213) comprend une ouverture d'entrée (19), notamment une fente d'entrée (19A), un élément optique dispersif (13A), notamment un réseau, un prisme ou un prisme à réseau et un détecteur (13B), et
dans lequel les composants de mesure sont couplés au spectromètre optique (213) par l'intermédiaire de l'ouverture d'entrée (19) et sont résolus spectralement via l'élément optique dispersif (13A) et dirigés vers le détecteur (13B), afin de produire une distribution spectrale (17) associée aux lentilles (225A, 225B, 225C, 225D) de l'unité de détection (221).
